# EUROPÄISCHE PATENTSCHRIFT

(11) **EP 3 941 787 B1**
(45) Veröffentlichungstag und Bekanntmachung des Hinweises auf die Patenterteilung: **24.04.2024**
(21) Anmeldenummer: 20712246.6
(22) Anmeldetag: 11.03.2020
(51) Int. Cl.: B60Q 1/14

(54) **LENKSTOCKSCHALTER FÜR EIN FAHRZEUG**
STEERING COLUMN SWITCH FOR A VEHICLE
COMMUTATEUR DE COLONNE DE DIRECTION DE VÉHICULE

(30) Priorität: 22.03.2019 DE 102019107342
(43) Veröffentlichungstag der Anmeldung: 26.01.2022
(73) Patentinhaber: Valeo Schalter und Sensoren GmbH, 74321 Bietigheim-Bissingen (DE)
(72) Erfinder: MOZER, Reiner, 74321 Bietigheim-Bissingen (DE)
(74) Vertreter: Ralf, Thorge
(86) Internationale Anmeldenummer: PCT/EP2020/056446
(87) Internationale Veröffentlichungsnummer: WO 2020/193132

(56) Entgegenhaltungen:
- EP-A1- 3 441 262
- DE-T2- 69 923 511
- DE-T5-112016 005 544
- JP-A- 2009 016 262
- JP-A- 2017 016 920
- US-A1- 2018 264 996

## Beschreibung

Die vorliegende Erfindung betrifft einen Lenkstockschalter für ein Fahrzeug, insbesondere für ein Nutzfahrzeug.

Ferner betrifft die Erfindung einen Lenkstockhebel mit einem Lenkstockschalter sowie ein Fahrzeug mit einem Lenkstockhebel.

Lenkstockschalter sind aus dem Stand der Technik grundsätzlich bekannt, wobei als Lenkstockschalter die am Lenkstock, d.h. am feststehenden Teil der Lenkung zwischen Armaturenbrett und Lenkrad, angeordneten Schalter bzw. Einrichtungen bezeichnet werden, welche in der Regel mit hebelartigen Bedienelementen und/oder mit Dreh-Bedienelementen gekoppelt werden können und mit deren Hilfe in einem Fahrzeug eine Betätigung von Fahrtrichtungsanzeigern, Fahrzeugbeleuchtung, Umschaltung von Abblend- zu Fernlicht, Lichthupe, Scheibenwisch- und Waschsteuerung ermöglichen, sowie bei einigen Fahrzeugen darüber hinaus die Steuerung der Geschwindigkeitsregelautomatik und/oder die Gangwahl.

Häufig sind einem Bedienelement dabei mehrere unterschiedliche Funktionen zugeordnet, wobei die einzelnen Funktionen üblicherweise durch unterschiedliche Betätigungsbewegungen, insbesondere durch Betätigungsbewegungen in unterschiedlichen Betätigungsrichtungen, ausgelöst werden können, insbesondere in Abhängigkeit von der Position des Bedienelementes. Zur Steuerung der einzelnen Funktionen ist üblicherweise eine gemeinsame, sich in einer Leiterplattenebene erstreckende Leiterplatte mit einer Auswerteeinrichtung, beispielsweise einem Mikrokontroller, vorgesehen, an welche die Positionen des Bedienelementes übermittelt werden können.

Zur Erfassung der Position des Bedienelementes sind aus dem Stand der Technik unterschiedliche Konzepte bekannt, insbesondere unterschiedliche Len kstockschalterkonzepte.

Zum einen sind beispielsweise Lenkstockschalter bekannt, bei denen die Positionen der einzelnen Bedienelemente mit Hilfe mechanisch betätigbarer, elektrischer Kontakte erfasst wird, wobei eine Änderung der Position eines Bedienelementes ein Öffnen bzw. Schließen wenigstens eines zugehörigen Kontaktes bewirkt, so dass aus dem wenigstens einen erfassten Kontaktzustand die Position des Bedienelementes ermittelt werden kann und die entsprechende Funktion ausgelöst werden kann. In der Regel werden die elektrischen Kontakte dabei aus Kontakt(gleit)flächen und darauf abgleitenden Kontaktschiebern oder relativ zueinander bewegbaren Kontaktelementen gebildet. Ferner ist bekannt, die einzelnen Betätigungszustände, insbesondere die Position des Bedienelementes, statt mittels elektrischer Kontakte, mit Hilfe von Magneten und Magnetsensoren berührungslos zu erfassen, und ein vom Magnetsensor erzeugtes Signal über elektrische Leiter an eine gemeinsame Leiterplatte zur weiteren Auswertung zu übertragen, wobei jeder Betätigungsrichtung jeweils ein separater Magnet und ein entsprechender Magnetsensor zugeordnet sind, die jeweils gemäß den jeweiligen Betätigungsrichtungen relativ zueinander angeordnet und relativ zueinander bewegbar sind.

US 2018/264996 A1 offenbart einen Lenkstockschalter für ein Fahrzeug mit mehreren Betätigunselementen, wobei deren Betätigungsposition durch eine relative Position von Magneten und Magnetsensoren bestimmt wird. Dabei konnte eine einzige Magnet/Magnetsensor-Anordnung für die Bestimmung einer Betätigungsposition eines Druckknopfes und eines Drehknopfes benutzt werden.

Vor diesem Hintergrund ist es eine Aufgabe der vorliegenden Erfindung, einen alternativen Lenkstockschalter bereitzustellen, vorzugsweise einen einfacher aufgebauten und damit kostengünstigeren Lenkstockschalter, insbesondere einen Lenkstockschalter, der eine kompaktere Ausgestaltung ermöglicht und somit einen geringeren Bauraumbedarf hat.

Gelöst wird diese Aufgabe erfindungsgemäß durch einen Lenkstockschalter gemäß dem unabhängigen Patentanspruch. Vorteilhafte Ausführungen der Erfindung sind Gegenstand der abhängigen Patentansprüche.

Ein gemäß der vorliegenden Erfindung ausgebildeter Lenkstockschalter für ein Fahrzeug, insbesondere für ein Nutzfahrzeug, weist ein Gehäuse, eine mit einem Bedienelement koppelbare Betätigungseinrichtung mit einem ersten Betätigungselement, einem zweiten Betätigungselement und einen dritten Betätigungselement, einen Magneten zur Erzeugung eines Magnetfeldes und einen Magnetsensor zur Erfassung des von dem Magneten erzeugten Magnetfeldes aufweist, wobei das erste, das zweite und das dritte Betätigungselement zumindest teilweise bewegbar gegenüber dem Gehäuse gelagert ist und durch eine Betätigungsbewegung der Betätigungselemente eine Relativbewegung zwischen dem Magneten und dem Magnetsensor bewirkbar ist, wobei der Magnetsensor dazu eingerichtet ist, die Relativbewegung zwischen dem Magneten und dem Magnetsensor und/oder eine relative Position von Magnet und Magnetsensor zueinander zu erfassen und in Abhängigkeit von der erfassten Relativbewegung und/oder der erfassten Relativposition ein Schaltsignal zur Bestimmung einer Betätigungsposition der Betätigungselemente und damit eines Schaltzustandes des Lenkstockschalters (20) zu erzeugen, wobei eine Betätigungsbewegung des ersten Betätigungselements der Betätigungseinrichtung in einer ersten Betätigungsrichtung eine Relativbewegung zwischen dem Magneten und dem Magnetsensor in einer ersten Bewegungsrichtung bewirkbar ist und durch eine Betätigungsbewegung des zweiten Betätigungselements der Betätigungseinrichtung in einer zweiten Betätigungsrichtung eine Relativbewegung zwischen dem Magneten und dem Magnetsensor in einer von der ersten Bewegungsrichtung verschiedenen, zweiten Bewegungsrichtung bewirkbar ist, wobei der Magnetsensor dazu eingerichtet ist, die Relativbewegung zwischen dem Magneten und dem Magnetsensor und/oder eine relative Position von Magnet und Magnetsensor zueinander jeweils in der ersten Bewegungsrichtung und in der zweiten Bewegungsrichtung zu erfassen und in Abhängigkeit von der erfassten Relativbewegung und/oder der erfassten Relativposition in der ersten Bewegungsrichtung ein erstes Schaltsignal zu erzeugen und in Abhängigkeit von der erfassten Relativbewegung und/oder der erfassten Relativposition in der zweiten Bewegungsrichtung, ein zweites Schaltsignal, wobei die erste Bewegungsrichtung, in welcher der Magnet und der Magnetsensor relativ zueinander bewegbar sind, eine Rotationsrichtung ist, wobei mittels wenigstens eines Betätigungselementes eine Relativdrehung zwischen dem Magneten und dem Magnetsensor um eine erste Achse bewirkbar ist, insbesondere eine Verdrehung des Magneten relativ zum Magnetsensor, wobei die zweite Bewegungsrichtung, in welcher der Magnet und der Magnetsensor relativ zueinander bewegbar sind, eine Axialrichtung ist, wobei mittels des zweiten Betätigungselementes eine Axialverschiebung zwischen dem Magneten und dem Magnetsensor entlang einer zweiten Achse bewirkbar ist, insbesondere eine Axialverschiebung des Magneten relativ zum Magnetsensor, wobei ein drittes Betätigungselement axial verschiebbar ist, wobei durch eine Axialverschiebung des dritten Betätigungselementes entlang oder parallel zu einer dritten Achse eine Axialverschiebung des Magneten oder des Magnetsensors entlang oder parallel zur dritten Achse bewirkbar ist.

Durch die Verwendung desselben Magneten, d.h. eines gemeinsamen Magneten, und die Verwendung desselben Magnetsensors, d.h. eines gemeinsamen Magnetsensors, zur Erfassung der Betätigung der Betätigungseinrichtung für zwei verschiedene Betätigungsrichtungen anstelle jeweils eines eigenen, separaten Magneten und/oder Magnetsensors für jede der Betätigungsrichtungen kann zum einen die Anzahl der erforderlichen Magneten und/oder Magnetsensoren reduziert werden. Zum anderen ist für eine derartige Sensorik erheblich weniger Bauraum erforderlich, sodass ein erfindungsgemäßer Lenkstockschalter besonders kompakt ausgestaltet werden kann und somit wenig Bauraum benötigt und sehr platzsparend ist. Und dass insbesondere bei einer vergleichbaren Funktionalität gegenüber aus dem Stand der Technik bekannten Len kstockschaltern.

Vorzugsweise ist ein erfindungsgemäßer Lenkstockschalters dabei derart ausgebildet, dass eine infolge einer, insbesondere mechanischen, Betätigung der Betätigungseinrichtung, insbesondere infolge einer mechanischen Betätigung eines Betätigungselementes, bewirkte Relativbewegung zwischen Magnet und Magnetsensor zu einer Änderung der magnetischen Flussdichte des von dem Magneten erzeugten Magnetfeldes führt, wobei die Änderung der magnetischen Flussdichte des vom Magneten erzeugten Magnetfeldes mittels des Magnetsensors erfasst werden kann.

Mittels einer vorzugsweise zusätzlich vorhandenen Auswerteeinrichtung kann dann, insbesondere in einer weiteren, besonders bevorzugten Ausgestaltung eines erfindungsgemäßen Lenkstockschalters, bevorzugt die Relativbewegung zwischen dem Magneten und dem Magnetsensor ermittelt werden und somit eine Betätigungsbewegung der Betätigungseinrichtung, insbesondere eine Schaltstellung und/oder ein Schaltzustand des Lenkstockschalters, insbesondere in Bezug auf die erste Betätigungsrichtung und/oder die zweite Betätigungsrichtung.

In einer weiteren vorteilhaften Ausgestaltung eines erfindungsgemäßen Lenkstockschalters ist dieser bevorzugt derart ausgebildet und eingerichtet, dass, insbesondere in einem funktionsgemäßen Einbauzustand des Lenkstockschalters in einem Fahrzeug, in Abhängigkeit von dem ermittelten Schaltzustand/den ermittelten Schaltzuständen vorzugsweise ein oder mehrere, mit dem Lenkstockschalter gekoppelte Aktuatoreinrichtungen angesteuert werden können.

Unter einer "Betätigungsrichtung" wird im Sinne der vorliegenden Erfindung insbesondere eine Bewegungsbahn eines zugehörigen Betätigungselementes verstanden, insbesondere vorzeichenunabhängig, d. h. eine Bewegung in beide Richtungen entlang einer zugehörigen Bewegungsbahn.

Unter einer "Bewegungsrichtung" wird im Sinne der vorliegenden Erfindung insbesondere eine resultierende Bewegungsbahn verstanden, insbesondere vorzeichenunabhängig, insbesondere eine resultierende Bewegungsbahn des Magneten oder des Magnetsensors. Werden sowohl der Magnet als auch der Magnetsensor bewegt, d.h. beide, insbesondere gleichzeitig, um die entsprechende Relativbewegung zwischen Magnet und Magnetsensor zu bewirken, ist die Bewegungsrichtung in diesem Fall vorzugsweise jeweils die resultierende Bewegungsbahn, d. h. die sich aus der Resultierenden der einzelnen Bewegungsvektoren von Magnet und Magnetsensor jeweils ergebende resultierende Bewegungsbahn.

Das heißt in anderen Worten, dass, wenn nur der Magnet bewegt wird, die Bewegungsrichtung des Magneten insbesondere durch die resultierende Bewegungsbahn des Magneten, entlang derer der Magnet relativ zum Magnetsensor bewegt wird, definiert ist, und wenn nur der Magnetsensor bewegt wird, die zugehörige Bewegungsrichtung des Magnetsensors insbesondere durch die resultierende Bewegungsbahn des Magnetsensors, entlang derer der Magnetsensor relativ zum Magneten bewegt wird, definiert ist.

In einer besonders bevorzugten Ausgestaltung eines erfindungsgemäßen Lenkstockschalters ist dieser vorzugsweise derart ausgebildet, dass durch wenigstens eine Betätigungsbewegung wenigstens eines der Betätigungselemente der Betätigungseinrichtung der Magnet bewegbar ist, insbesondere nur der Magnet, während der Magnetsensor bevorzugt nicht bewegt wird. Dies hat sich insbesondere als vorteilhaft erwiesen, wenn der Magnetsensor auf einer Trägerplatte angeordnet ist, beispielsweise auf einer Leiterplatte, da in diesem Fall ansonsten die gesamte Trägerplatte zur Bewegung des Magnetsensors mitbewegt werden müsste, während, wenn nur der Magnet zu bewegen ist, in der Regel lediglich kleinere Komponenten und/oder Bauteile mitbewegt werden müssen, was in vielen Fällen bei dem in der Regel sehr begrenzten zur Verfügung stehenden Bauraum in vielen Fällen einfacher zu realisieren und somit vorteilhafter ist.

In einigen Fällen kann es aber auch vorteilhafter sein, den Magnetsensor relativ gegenüber dem Magneten zu bewegen, insbesondere zusammen mit einer zugehörigen Trägerplatte.

Um die entsprechenden Relativbewegungen zwischen Magnet und Magnetsensor in der ersten Bewegungsrichtung und in der zweiten Bewegungsrichtung jeweils in Abhängigkeit von einer Betätigungsbewegung der Betätigungseinrichtung in einer ersten Betätigungsrichtung und einer zweiten Betätigungsrichtung zu bewirken, weist die Betätigungseinrichtung insbesondere eine spezielle, entsprechend ausgestaltete und geeignete Kinematik auf, insbesondere mehrere, vorzugsweise wenigstens zwei, Betätigungselemente, welche mit dem Magneten und dem Magnetsensor in entsprechend geeigneter Weise derart gekoppelt sind, dass durch eine Betätigung der Betätigungseinrichtung, insbesondere jeweils wenigstens eines Betätigungselementes, eine entsprechende Relativbewegung zwischen Magnet und Magnetsensor bewirkbar ist. Darüber hinaus sind der Magnet und der Magnetsensor bevorzugt ebenfalls in geeigneter Weise ausgebildet, wobei der Magnet insbesondere eine geeignete Polung aufweist und insbesondere in geeigneter Weise relativ zum Magnetsensor angeordnet und bewegbar ist.

Ein Lenkstockschalter, insbesondere die Betätigungseinrichtung, weist insbesondere wenigstens ein in wenigstens einer Betätigungsrichtung bewegbar gegenüber dem Gehäuse gelagertes Betätigungselement auf, wobei das Betätigungselement derart mit dem Magneten und/oder dem Magnetsensor gekoppelt ist, dass durch eine Betätigungsbewegung des Betätigungselementes eine Relativbewegung zwischen dem Magneten und dem Magnetsensor in wenigstens einer Bewegungsrichtung bewirkbar ist.

Hierdurch lässt sich in einem funktionsgemäßen Einbauzustand des Lenkstockschalters in einem Fahrzeug auf einfache Art und Weise eine Betätigung von einem mit der Betätigungseinrichtung gekoppelten Bedienelement auf den Lenkstockschalter, vorzugsweise auf die Betätigungseinrichtung, insbesondere auf ein Betätigungselement der Betätigungseinrichtung, übertragen.

In einer Ausgestaltung eines Lenkstockschalters weist die Betätigungseinrichtung wenigstens ein erstes, in einer ersten Betätigungsrichtung bewegbar gelagertes Betätigungselement und wenigstens ein zweites in einer zweiten Betätigungsrichtung bewegbar gelagertes Betätigungselement auf, wobei das erste Betätigungselement und das zweite Betätigungselement insbesondere jeweils derart mit dem Magneten und/oder dem Magnetsensor gekoppelt sind, dass mittels des ersten Betätigungselementes eine Relativbewegung zwischen dem Magneten und dem Magnetsensor in einer ersten Bewegungsrichtung bewirkbar ist, und mittels des zweiten Betätigungselementes eine Relativbewegung zwischen dem Magnet und dem Magnetsensor in einer von der ersten Bewegungsrichtung verschiedenen, zweiten Bewegungsrichtung. Hierdurch lässt sich auf einfache Art und Weise ein in wenigstens zwei Betätigungsrichtungen betätigbarer Lenkstockschalter bereitstellen.

Gemäß der Erfindung, ist der Lenkstockschalter ferner derart ausgebildet, dass durch eine mechanische Betätigungsbewegung der Betätigungseinrichtung in einer dritten Betätigungsrichtung, durch eine Betätigungsbewegung eines Betätigungselementes der Betätigungseinrichtung in einer dritten Betätigungsrichtung, eine Relativbewegung zwischen dem Magneten und dem Magnetsensor in einer dritten Bewegungsrichtung bewirkbar ist, wobei der Magnetsensor vorzugsweise dazu eingerichtet ist, die Relativbewegung und/oder eine relative Position des Magneten zum Magnetsensor jeweils in der ersten Bewegungsrichtung, in der zweiten Bewegungsrichtung und in der dritten Bewegungsrichtung zu erfassen und in Abhängigkeit von der erfassten Relativbewegung und/oder der erfassten Relativposition in der ersten Bewegungsrichtung ein erstes Schaltsignal zu erzeugen und in Abhängigkeit von der erfassten Relativbewegung und/oder der erfassten Relativposition in der zweiten Bewegungsrichtung, ein zweites Schaltsignal zu erzeugen, und in Abhängigkeit von der erfassten Relativbewegung und/oder der erfassten Relativposition in der dritten Bewegungsrichtung ein drittes Schaltsignal zu erzeugen, wobei in diesem Fall der Magnetsensor insbesondere einen 3D-Hall-Sensor aufweist oder ein 3D-Hall-Sensor ist.

Gemäß der Erfindung, weist die Betätigungseinrichtung ein weiteres, drittes, in einer weiteren, dritten, Betätigungsrichtung bewegbar gelagertes Betätigungselement auf, wobei mittels des ersten, mit dem Magnet und/oder dem Magnetsensor gekoppelten Betätigungselementes eine Relativbewegung zwischen der Magnet und dem Magnetsensor in einer ersten Bewegungsrichtung bewirkbar ist, und mittels des ersten Betätigungselementes und/oder mittels eines zweiten, mit dem Magnet und/oder dem Magnetsensor gekoppelten Betätigungselementes eine Relativbewegung zwischen dem Magnet und dem Magnetsensor in einer von der ersten Bewegungsrichtung verschiedenen, zweiten Bewegungsrichtung bewirkbar ist, und wobei mittels des ersten Betätigungselementes und/oder mittels des zweiter Betätigungselementes und/oder mittels des Weiteren, mit dem Magnet und/oder dem Magnetsensor gekoppelten Betätigungselementes eine Relativbewegung zwischen dem Magnet und dem Magnetsensor in einer sowohl von der ersten Bewegungsrichtung als auch von der zweiten Bewegungsrichtung verschiedenen, dritten Bewegungsrichtung bewirkbar ist.

In einer weiteren Ausgestaltung eines nicht erfindungsgemäßen Lenkstockschalters, insbesondere alternativ oder zusätzlich zu einem dritten Betätigungselement, kann die Betätigungseinrichtung auch ein in wenigstens zwei verschiedenen Bewegungsrichtungen bewegbar gelagertes Betätigungselement aufweisen, wobei dieses Betätigungselement insbesondere derart mit dem Magneten und/oder dem Magnetsensor gekoppelt ist, dass durch eine Betätigungsbewegung des Betätigungselementes eine Relativbewegung zwischen dem Magneten und dem Magnetsensor wenigstens in einer ersten Bewegungsrichtung oder alternativ, insbesondere wahlweise, in einer von der ersten Bewegungsrichtung verschiedenen, weiteren, insbesondere zweiten oder dritten Bewegungsrichtung bewirkbar ist.

Dadurch kann, insbesondere wahlweise, durch eine Betätigungsbewegung des ersten Betätigungselementes ferner eine Relativbewegung zwischen dem Magneten und dem Magnetsensor in einer von der ersten Bewegungsrichtung verschiedenen, weiteren Bewegungsrichtung, insbesondere einer zweiten oder dritten Bewegungsrichtung, bewirkt werden. D.h. bevorzugt kann mit einem Betätigungselement des Lenkstockschalters, insbesondere wahlweise, d.h. nicht gleichzeitig, sondern alternativ, eine Betätigungsbewegung in zwei verschiedenen Bewegungsrichtungen bewirkt werden. Somit lassen sich mit nur zwei Betätigungselementen drei Relativ-Bewegungsrichtungen realisieren.

Erfindungsgemäß ist die erste Bewegungsrichtung, eine Rotationsrichtung, wobei die Betätigungseinrichtung derart ausgebildet ist, dass mittels des ersten Betätigungselementes eine Relativdrehung zwischen dem Magneten und dem Magnetsensor um eine erste Achse bewirkbar ist, insbesondere eine Verdrehung des Magneten relativ zum Magnetsensor.

Hierdurch lässt sich ein Lenkstockschalter bereitstellen, welcher eine Drehbetätigung ermöglicht, und somit insbesondere die Verwendung eines Drehrings oder Drehtasters als Bedienelement, insbesondere in einem Lenkstockhebel, was aus ergonomischer Sicht in vielen Fällen einen Vorteil darstellt.

Vorzugsweise ist der Lenkstockschalter dabei derart ausgebildet, dass die Rotationsbewegung zwischen Magnet und Magnetsensor, d. h. die Verdrehung von Magnet und Magnetsensor relativ zueinander, vorzugsweise durch eine Rotation des zugehörigen Betätigungselementes bewirkt werden kann, wobei besonders bevorzugt das Betätigungselement dabei ebenfalls insbesondere um die erste Achse verdreht werden kann.

Dazu ist in einer besonderes bevorzugten Ausgestaltung des Lenkstockschalters der Magnet oder der Magnetsensor, vorzugsweise der Magnet, insbesondere drehfest mit dem zugehörigen Betätigungselement gekoppelt, insbesondere verbunden, vorzugsweise durch eine formschlüssige Verbindung, zum Beispiel mittels eines mit dem Magneten fest verbundenen, sich in radialer Richtung zur ersten Achse und zumindest teilweise in axialer Richtung entlang der ersten Achse erstreckenden Vorsprungs, der in eine entsprechende Ausnehmung im Betätigungselement eingreift oder umgekehrt.

Als besonders vorteilhaft hat sich für diese Art der Verbindung eine Nut-Feder-Verbindung erwiesen, bei welcher ein radialer Vorsprung in eine Nut, insbesondere eine schienenförmige Nut eingreift. Hierdurch kann auf einfache Art und Weise insbesondere eine Mitnahme des Magneten mit dem Betätigungselement bei einer Betätigung des Betätigungselementes, insbesondere einer Drehung des Betätigungselements, ermöglicht werden. Dabei kann der Magnet selbst eine entsprechende Nut oder einen entsprechenden Vorsprung aufweisen oder bilden, d.h. integral mit dem Vorsprung ausgebildet sein. Der Vorsprung kann aber auch durch ein weiteres, mit dem Magneten verbundenes Bauteil, insbesondere einem Mitnehmer, gebildet sein.

In einer besonderes bevorzugten Ausgestaltung eines erfindungsgemäßen Lenkstockschalters ist dieser, insbesondere die Betätigungseinrichtung, dabei derart ausgebildet, dass während einer Rotationsbewegung des Magneten um die erste Achse ein axialer Abstand in Längsrichtung der Rotationsachse zwischen dem Magneten und dem Magnetsensor konstant bleibt, d. h. unveränderlich ist, und der Magnet und der Magnetsensor lediglich relativ zueinander verdreht werden, wobei der Magnet besonders bevorzugt eine definierte Polung aufweist, welche derart gewählt ist, dass eine Verdrehung zwischen dem Magneten und dem Magnetsensor eine Änderung des Magnetfeldes, insbesondere der magnetischen Flussdichte, bewirkt.

Besonders bevorzugt nimmt das erste Schaltsignal dabei wenigstens einen ersten Schaltwert an, wenn der Magnet bis in eine erste Drehposition relativ zum Magnetsensor um die erste Achse verdreht worden ist oder sich in der ersten Drehposition befindet, und einen zweiten Schaltwert, wenn der Magnet bis in eine zweite Drehposition relativ zum Magnetsensor um die erste Achse verdreht worden ist oder sich in dieser zweiten Drehposition befindet. Dadurch lässt sich auf besonders einfache Art ein Drehschalter realisieren. Vorzugsweise ist das Betätigungselement hierbei ein Drehring oder ein Drehtaster, wobei das drehbare Betätigungselement insbesondere mit einem Dreh-Bedienelement, insbesondere einen Bedien-Drehring oder einem Bedien-Drehknopf gekoppelt werden kann.

In einer besonderes bevorzugten Ausgestaltung eines erfindungsgemäßen Lenkstockschalters können der Magnet und der Magnetsensor mittels des drehbaren Betätigungselementes vorzugsweise um einen Verdrehwinkel von insgesamt wenigstens 10°, 20°, 30°, 40° oder 50° bis jeweils höchstens 60°, 70°, 80°, 90° oder 100° relativ zueinander verdreht werden, wobei besonders bevorzugt der Magnet gegenüber dem Magnetsensor verdreht werden kann.

Besonders bevorzugt können der Magnet und der Magnetsensor dabei in mehreren, vorzugsweise äquidistanten, Stufen über den gesamten Drehwinkelbereich relativ zueinander verdreht werden, insbesondere in wenigstens zwei, besonders bevorzugt in wenigstens acht, vorzugsweise in wenigstens zehn, diskreten Stufen.

Dadurch lassen sich mithilfe eines entsprechend geeigneten Dreh-Bedienelementes verschiedene Schaltstufen auf besonders einfache Art und Weise, vor allem besonders bauraumsparend, realisieren, wobei besonders bevorzugt für jede der diskreten Schaltstufen jeweils ein entsprechendes Schaltsignal vom Magnetsensor erzeugt werden kann, insbesondere ein jeweils entsprechend eindeutiges Signal, sodass eine entsprechende Auswertung des Schaltzustandes des Lenkstockschalters möglich ist.

Auf diese Weise lassen sich beispielsweise mit nur einem einzigen Dreh-Bedienelement, dass in einem funktionsgemäßen Einbauzustand eines Lenkstockschalters in einem Fahrzeug mit den zugehörigen Betätigungselement des Lenkstockschalters gekoppelt ist, verschiedene Schaltzustände einer mit dem Lenkstockschalter gekoppelten Beleuchtungseinrichtung schalten, zum Beispiel Standlicht, Abblendlicht, Tagfahrlicht und Automatiklicht.

In diesem Fall kann ein zugehöriges Schaltsignal bevorzugt mehr als einen ersten Schaltwert und einen zweiten Schaltwert annehmen, vorzugsweise wenigstens acht, insbesondere bis zu zehn Schaltwerte über den gesamten Betätigungsbereich, insbesondere diskrete Schaltwerte, sodass mehr als zwei Betätigungszustände in der zugehörigen Betätigungsrichtung erfasst werden können.

Erfindungsgemäß ist die zweite Bewegungsrichtung in welcher der Magnet und der Magnetsensor relativ zueinander bewegbar sind, eine Axialrichtung, wobei mittels des zweiten Betätigungselementes eine Axialverschiebung zwischen dem Magneten und dem Magnetsensor entlang einer zweiten Achse bewirkbar ist, insbesondere eine Axialverschiebung des Magneten relativ zum Magnetsensor.

Dadurch kann auf besonders einfache Art und Weise eine Betätigung des Lenkstockschalters durch ein Drucktaster realisiert werden, beispielsweise zur Betätigung eines Horns (Hupe) oder eines Schalters zum Umschalten einer Anzeige eines Bordcomputers oder dergleichen.

Besonders bevorzugt verläuft die zweite Achse dabei parallel zur ersten Achse. Dies ermöglicht eine besonders vorteilhafte Ausgestaltung der Betätigungseinrichtung und damit des Lenkstockschalters.

Erfindungsgemäß ist durch das entlang der zweiten Achse axialverschiebbare zweite Betätigungselement eine Axialverschiebung des Magneten oder des Magnetsensors, insbesondere des Magneten, bewirkbar, wobei der Magnet insbesondere entlang der ersten Achse in Richtung des Magnetsensors verschiebbar ist.

D. h. mit anderen Worten, dass mittels des entlang der zweiten Achse axial verschiebbaren Betätigungselementes der Magnet und der Magnetsensor besonders bevorzugt entlang der ersten Achse aufeinander zu bewegt werden können, wobei vorzugsweise der Magnet axial verschoben werden kann. Dadurch kann ein Abstand entlang der ersten Achse zwischen dem Magneten und dem Magnetsensor verringert werden, wodurch sich in Abhängigkeit von der Abstandsänderung zwischen dem Magneten und dem Magnetsensor die vom Magnetsensor erfasste Magnetfeldstärke, insbesondere die magnetischen Flussdichte, ändert, sodass aus dieser auf die Betätigung des Lenkstockschalters rückgeschlossen werden kann.

Erfindungsgemäß weist die Betätigungseinrichtung dazu wenigstens ein zweites Betätigungselement auf, wobei das zweite Betätigungselement entlang der zweiten Achse axial verschiebbar ist.

D.h., erfindungsgemäß ist eine Verdrehung von Magnet und Magnetsensor relativ zueinander um eine erste Achse, insbesondere eine Verdrehung des Magneten relativ zum Magnetsensor, mittels eines ersten Betätigungselementes bewirkbar und eine Relativbewegung in axialer Richtung entlang einer zweiten Achse, insbesondere eine Axialverschiebung des Magneten, mittels eines zweiten Betätigungselementes.

In einer besonders bevorzugten Ausgestaltung eines erfindungsgemäßen Lenkstockschalters ist der Lenkstockschalter insbesondere dazu ausgebildet, in einem Lenkstockhebel mit mehreren Bedienelementen eingesetzt, insbesondere eingebaut, zu werden.

Vorzugsweise ist dabei wenigstens ein Bedienelement des Lenkstockhebels in einer Längsrichtung des Lenkstockhebels betätigbar und das axial verschiebbare Betätigungselement des Lenkstockschalters mit dem Bedienelement des Lenkstockhebels mechanisch koppelbar, insbesondere verbindbar, sodass durch Drücken des Bedienelementes, insbesondere in der Längsrichtung des Lenkstockhebels, eine Betätigung des Lenkstockschalters bewirkt werden kann, wobei die Achse, entlang derer das zugehörige Betätigungselement axial verschiebbar ist, insbesondere parallel zur Längsrichtung des Lenkstockhebels verläuft und/oder parallel zur Betätigungsrichtung des Bedienelementes, und insbesondere mit wenigstens einer von diesen zusammenfällt. Hierdurch lässt sich auf besonders einfache Art und Weise ein Druck-Bedienelement realisieren, beispielsweise zur Betätigung eines Horns (Hupe) oder eines Umschaltens einer Anzeige eines Bordcomputers oder dergleichen.

In einer besonderes bevorzugten Ausgestaltung eines erfindungsgemäßen Lenkstockschalters weist das axial verschiebbare Betätigungselement einen sich in axialer Richtung erstreckenden Schieber und eine sich im Wesentlichen rechtwinklig zum Schieber erstreckende Betätigungsfläche auf, über welche eine Betätigungskraft auf den Schieber aufbringbar ist und die Axialverschiebung des Betätigungselementes bewirkbar ist.

In einer besonders einfachen und bevorzugten Ausgestaltung ist dabei insbesondere bevorzugt entweder der Magnet oder der Magnetsensor, insbesondere der Magnetsensor, axial an das Betätigungselement gekoppelt, insbesondere axial an dem Betätigungselement festgelegt, wobei der Magnet oder der Magnetsensor, besonders bevorzugt der Magnet, dabei direkt, d. h. ohne ein weiteres Bauteil dazwischen, oder indirekt, d. h. mit einem oder mehreren Bauteilen dazwischen, mit dem Betätigungselement verbunden sein kann, vorzugsweise durch eine formschlüssige Verbindung. Dazu kann der Magnet beispielsweise in eine entsprechende, in axialer Richtung eine Bewegung des Magneten begrenzende Vertiefung im Betätigungselement eingesetzt sein.

Wird der Lenkstockschalter über das zugehörige Betätigungselement betätigt, nimmt das zugehörige Schaltsignal, vorzugsweise das zweite Schaltsignal, insbesondere einen ersten Schaltwert an, wenn eine erste Relativposition zwischen Magnet und Magnetsensor erreicht worden ist, insbesondere entlang der ersten Achse, besonders bevorzugt wenn der Magnet bis in eine erste Position relativ zum Magnetsensor entlang der ersten Achse verschoben worden ist, und einen zweiten Schaltwert, wenn eine zweite Relativposition erreicht oder eingenommen ist, insbesondere wenn der Magnet relativ zum Magnetsensor bis in eine zweite Position verschoben worden ist, insbesondere entlang der ersten Achse oder sich in dieser zweiten Position befindet.

In einer besonders bevorzugt Ausgestaltung eines erfindungsgemäßen Lenkstockschalters ist der Magnet oder der Magnetsensor, insbesondere der Magnet, vorzugsweise drehfest mit dem ersten der Betätigungselemente gekoppelt und ist drehbar gegenüber den anderen, insbesondere zweiten, Betätigungselement gelagert, wobei der Magnet vorzugsweise axialverschiebbar gegenüber dem ersten Betätigungselement gelagert ist, aber fest mit dem anderen, zweiten Betätigungselement in axialer Richtung gekoppelt ist.

Dabei ist der Magnet oder der Magnetsensor, insbesondere der Magnet, vorzugsweise um eine erste Achse drehbar gegenüber dem zweiten Betätigungselement gelagert und insbesondere entlang der ersten Achse axial verschiebbar, vorzugsweise relativ gegenüber dem ersten Betätigungselement, wobei der Magnet oder der Magnetsensor, insbesondere der Magnet, dabei vorzugsweise drehbeweglich vom zweiten Betätigungselement aufgenommen ist.

Hierdurch lässt sich eine besonders kompakte und platzsparende Betätigungseinrichtung realisieren und somit ein besonders kompakter und platzsparender und infolgedessen wenig Bauraum benötigender Lenkstockschalter bereitstellen.

Erfindungsgemäß ist ein drittes Betätigungselement axial verschiebbar, wobei durch eine Axialverschiebung des Betätigungselementes entlang oder parallel zu einer dritten Achse eine Axialverschiebung des Magneten oder des Magnetsensors entlang oder parallel zur dritten Achse, bewirkbar ist.

D. h., erfindungsgemäß weist die Betätigungseinrichtung ferner ein drittes Betätigungselement auf, ein ebenfalls axial verschiebbares Betätigungselement.

Besonders bevorzugt ist der Lenkstockschalter dabei derart ausgebildet, dass mittels dieses dritten Betätigungselementes insbesondere der Magnetsensor axial verschiebbar ist, vorzugsweise in einer dritten Bewegungsrichtung, insbesondere entlang oder parallel der dritten Achse, wobei durch eine Betätigung des dritten Betätigungselementes insbesondere ein drittes Schaltsignal erzeugbar ist.

Hierdurch kann auf einfache Art und Weise eine weitere Betätigungsfunktion in den Lenkstockschalter integriert werden.

In einer besonders bevorzugten Ausgestaltung eines erfindungsgemäßen Lenkstockschalters verläuft die dritte Achse dabei insbesondere senkrecht zur ersten Achse und/oder senkrecht zur zweiten Achse. Dadurch lassen sich auf engem Raum verschiedene Betätigungsfunktionen durch Betätigungen in verschiedenen Betätigungsrichtungen realisieren. Durch die verschiedenen Betätigungsrichtungen ist eine besonders intuitive Bedienung eines entsprechenden Lenkstockschalters und damit eines entsprechenden Lenkstockhebels möglich, da die einzelnen Betätigungsfunktionen jeweils entsprechenden, verschiedenen Betätigungsrichtungen zugeordnet sind.

In einer weiteren, möglichen Ausgestaltung eines erfindungsgemäßen Lenkstockschalters können auch das erste Betätigungselement und/oder das zweite Betätigungselement zusätzlich entlang einer weiteren Achse axial verschiebbar sein.

D. h. mit anderen Worten, dass in einer alternativen Ausgestaltung eines erfindungsgemäßen Lenkstockschalters auch mit nur zwei Betätigungselementen drei Betätigungsrichtungen realisiert sein können, in dem mittels eines Betätigungselementes zwei Betätigungen in unterschiedlichen Betätigungsrichtungen bewirkt werden können. Ebenso ist denkbar, dass auch bei drei vorhandenen Betätigungselementen wenigstens eines der Betätigungselemente zusätzlich in einer weiteren Richtung axial verschiebbar ist und ebenfalls zwei Betätigungen in unterschiedlichen Betätigungsrichtungen ermöglicht.

Durch ein drittes Betätigungselement und/oder ein erstes Betätigungselement und/oder ein zweites Betätigungselement, welches in zwei Betätigungsrichtungen betätigt werden kann, kann auf einfache Art und Weise wenigstens eine weitere, insbesondere dritte, Betätigungsfunktion realisiert werden.

Besonders bevorzugt nimmt ein auf diese Weise erzeugbares drittes Schaltsignal dabei einen ersten Schaltwert an, wenn eine erste Relativposition zwischen Magnet und Magnetsensor erreicht wird oder eingenommen ist, insbesondere entlang der dritten Achse, besonders bevorzugt wenn der Magnet bis in eine erste Drehposition relativ zum Magnetsensor entlang der dritten Achse verschoben worden ist oder sich in dieser ersten Position befindet, und vorzugsweise wenigstens einen zweiten Schaltwert, wenn eine zweite Relativposition, insbesondere entlang der dritten Achse, erreicht worden ist, insbesondere wenn der Magnetsensor bis in eine zweite Position relativ zum Magneten entlang der dritten Achse verschoben worden ist oder sich in dieser zweiten Position befindet.

Bevorzugt ist der Magnet eines erfindungsgemäßen Lenkstockschalters dabei zur Erzeugung eines Magnetfeldes ausgebildet und weist einen Permanentmagneten auf oder umfasst einen Permanentmagneten. Alternativ ist jedoch auch denkbar, als Magnet einen Elektromagneten einzusetzen, insbesondere einen ansteuerbaren Elektromagneten, beispielsweise eine bestrombare Spule oder dergleichen, welcher bei Bedarf gezielt bestromt werden kann, insbesondere derart, dass sich ein gewünschtes, definiertes, resultierendes Magnetfeld einstellt.

Der Magnetsensor ist insbesondere zur Erfassung einer magnetischen Flussdichte des vom Magneten erzeugten Magnetfeldes ausgebildet und eingerichtet, insbesondere zur Erfassung einer Änderung einer magnetischen Flussdichte. Derartige Magnetsensoren sind allgemein bekannt. Vorzugsweise weist der Magnetsensor wenigstens einen Hall-Sensor und/oder einen magnetresistiven Sensor auf oder ist ein ein Hall-Sensor oder magnetresistiver Sensor.

Hierdurch kann auf einfache Art und Weise eine, insbesondere mechanische, Betätigung der Betätigungseinrichtung erfasst werden.

In einer besonders bevorzugten Ausgestaltung eines erfindungsgemäßen Lenkstockschalters weist der Magnetsensor einen 2D- oder 3D-Hall-Sensor auf oder ist ein 2D-oder 3D-Hall-Sensor. Mit einem derartigen Magnetsensor lässt sich auf besonders einfache Art und Weise Lenkstockschalter mit einem gemeinsamen Magnetsensor für mehrere Betätigungsrichtungen sowie für mehrere Bewegungsrichtungen des Magneten bereitstellen.

In einer weiteren, bevorzugten Ausgestaltung eines erfindungsgemäßen Lenkstockschalters, insbesondere einer Weiterbildung, ist der Magnetsensor auf einer Trägerplatte angeordnet, insbesondere einer Leiterplatte, wobei sich die Trägerplatte vorzugsweise zumindest teilweise in einer Trägerplattenebene erstreckt und der Magnetsensor insbesondere derart auf der Trägerplatte angeordnet ist, dass sich der Magnetsensor mit seiner Haupterstreckung wenigstens im Wesentlichen parallel, vorzugsweise parallel, zur Trägerplattenebene erstreckt.

Vorzugsweise weist der Lenkstockschalter ferner eine Auswerteeinrichtung zur Auswertung der vom Magnetsensor erzeugten Schaltsignale zur Ermittlung der Bewegungen und/oder Positionen der Betätigungselemente in den jeweiligen Betätigungsrichtungen bzw. der Magnete in den jeweiligen Bewegungsrichtungen auf, um die entsprechenden Schaltstellungen und damit die entsprechenden Schaltzustände der Betätigungselemente der Betätigungseinrichtung für die verschiedenen Betätigungsrichtungen des Lenkstockschalters zu erfassen. In einer besonders vorteilhaften Ausgestaltung eines erfindungsgemäßen Lenkstockschalters ist die Auswerteeinrichtung dabei ebenfalls auf der Trägerplatte angeordnet, d. h. vorzugsweise auf einer gemeinsamen Trägerplatte mit dem Magnetsensor, insbesondere auf einer gemeinsamen Leiterplatte. Hierdurch lässt sich eine besonders kompakte und bauraumsparende Anordnung erreichen und eine schnelle Übertragung der Schaltsignale an die Auswerteeinrichtung.

In einer alternativen Ausgestaltung kann eine entsprechende Auswerteeinrichtung aber auch an anderer Stelle angeordnet sein, beispielsweise auf einer separaten Leiterplatte. Auch ist denkbar, dass die Auswerteeinrichtung nicht Teil des Lenkstockschalters ist, sondern in einem funktionsgemäßen Einbauzustand in einem Fahrzeug in einer Baugruppe außerhalb von diesem angeordnet ist und lediglich elektrisch mit dem Lenkstockschalter, insbesondere dem Magnetsensor, verbunden ist.

Zur elektrischen Verbindung, insbesondere mit einer Steuerungseinrichtung oder dergleichen und/oder einer Aktuatorik, weist Lenkstockschalter vorzugsweise ferner eine Kontaktierungseinrichtung, insbesondere eine Steckverbindervorrichtung auf, worüber der Lenkstockschalter beispielsweise mit einem Wischermotor oder einem Horn (einer Hupe) elektrisch verbunden werden kann.

Wie bereits erwähnt, kann der Magnetsensor dabei insbesondere auf einer Trägerplatte angeordnet, insbesondere befestigt, sein, beispielsweise auf einer Leiterplatte, wobei in einer besonders vorteilhaften Ausgestaltung eines erfindungsgemäßen Lenkstockschalters insbesondere eine Relativbewegung zwischen dem Magneten und dem Magnetsensor bewirkbar ist, vorzugsweise in einer dritten Bewegungsrichtung, insbesondere eine Axialverschiebung des Magnetsensors relativ zum Magneten, wobei die Axialverschiebung des Magnetsensors relativ zum Magneten vorzugsweise durch eine Axialverschiebung der Trägerplatte bewirkt werden kann, insbesondere durch eine Axialverschiebung in der Trägerplattenebene, wobei sich die Trägerplattenebene besonders bevorzugt in einer Ebene senkrecht zur ersten Achse erstreckt.

Dadurch kann eine besonders einfache und kompakte und damit platz- und bauraumsparende Betätigungseinrichtung realisiert werden, insbesondere eine Betätigungseinrichtung mit einer besonders einfachen Kinematik.

Dabei ist das zugehörige Betätigungselement ferner bevorzugt derart mit der Trägerplatte gekoppelt, dass durch eine Betätigungsbewegung des Betätigungselementes eine Axialverschiebung der Trägerplatte und damit des mit der Trägerplatte verbundenem Magnetsensors relativ gegenüber dem Magneten bewirkbar ist.

In einer weiteren, bevorzugten Ausgestaltung eines erfindungsgemäßen Lenkstockschalters ist der Magnet insbesondere ein Permanentmagnet, der Magnet vorzugsweise zumindest abschnittsweise, insbesondere vollständig, die Form eines geraden Prismas aufweist mit einer sich senkrecht zu einer Grundfläche erstreckenden Längsachse, insbesondere eines geraden Prismas mit kreisrunder Grundfläche. D. h. Vorzugsweise ist der Magnet ein zylinderförmig ausgebildeter Permanentmagnet.

Diese Ausgestaltung eines Magneten ermöglicht eine einfache drehbare Lagerung des Magneten in einem der Betätigungselemente sowie ferner eine gleichzeitige, axial bewegliche Lagerung gegenüber einem weiteren Betätigungselement.

Unter einem "Prisma" wird im Sinne der vorliegenden Erfindung und im mathematisch üblichen Sinne ein geometrischer Körper verstanden, der durch Parallelverschiebung einer ebenen Grundfläche entlang einer nicht in dieser Ebene liegenden Geraden im Raum entsteht, wobei unter einem "geraden Prisma" ein Prisma verstanden wird, dessen Grundfläche entlang einer Geraden, die senkrecht auf der Grundfläche steht, im Raum verschoben worden ist.

In einer weiteren bevorzugten Ausgestaltung eines erfindungsgemäßen Lenkstockschalters insbesondere in einer Weiterbildung, ist der Magnetsensor auf einer Trägerplatte, insbesondere einer Leiterplatte angeordnet, wobei sich die Trägerplatte zumindest teilweise in einer Trägerplattenebene erstreckt und der Magnet derart relativ zum Magnetsensor angeordnet ist, dass sich seine Längsachse senkrecht zur Trägerplattenebene erstreckt, wobei der Magnet insbesondere derart angeordnet ist, dass seine Längsachse mit der ersten Achse zusammenfällt und der Magnet vorzugsweise derart angeordnet und gelagert ist, dass er um seine Längsachse drehbar ist.

D. h. besonders bevorzugt weist ein erfindungsgemäßer Lenkstockschalter einen die Form eines geraden Prismas aufweisenden Magneten auf, welcher insbesondere mit einer seiner Stirnseiten dem Magnetsensor zugewandt angeordnet ist.

Hierdurch lässt sich auf besonders einfache Art und Weise mit nur einem Magneten jeweils eine vom Magnetsensor erfassbare Änderung der magnetischen Flussdichte durch eine Relativbewegung zwischen Magnet und Magnetsensor in wenigstens drei verschiedenen Bewegungsrichtungen realisieren.

In einer Weiterbildung eines erfindungsgemäßen Lenkstockschalters weist der Magnet vorzugsweise eine konstante Polung auf, insbesondere entlang seiner Längsachse, d.h. über seine Höhe, wobei vorzugsweise eine Trennebene zwischen den beiden Magnetpolen durch eine Längsmittelebene gebildet ist.

D.h. mit anderen Worten, dass der Magnet dabei bevorzugt ein einzelner Permanentmagnet mit nur einem Polpaar ist, d. h. mit nur einem Nordpol und einem Südpol, wobei bei einem zylinderförmigen Magneten mit konstanter Polung über seine Höhe, vorzugsweise eine sich über die gesamte Höhe erstreckende Zylinderhälfte den Nordpol bildet und die andere, sich ebenfalls über die gesamte Höhe erstreckende Zylinderhälfte den Südpol.

Eine derartige Polung ermöglicht eine besonders vorteilhafte, insbesondere kompakte und platzsparende, Ausgestaltung einer Betätigungseinrichtung für einen Lenkstockschalter und damit ein besonders kompakten, platzsparenden und bauraumsparenden Lenkstockschalter. Ferner kann ein derartiger Magnet einfach hergestellt werden.

Eine besonders vorteilhafte Ausgestaltung eines erfindungsgemäßen Lenkstockschalters ergibt sich, wenn ein derartig ausgebildeter Magnet mit seiner Trennebene parallel zur ersten Achse angeordnet ist. Dadurch können mit einem einzigen Magneten und einem einzigen Magnetsensor, insbesondere einem einzigen 3D-hall-Sensor, Relativbewegungen zwischen Magnet und Magnetsensor in drei Raumrichtungen erfasst werden.

In einer weiteren bevorzugten Ausgestaltung eines erfindungsgemäßen Lenkstockschalters weist der Lenkstockschalter wenigstens eine Rückstelleinrichtung auf, insbesondere wenigstens ein elastisch deformierbares Rückstellelement, vorzugsweise eine elastische Gummimatte oder und/oder eine Rückstellfeder, zur Rückstellung wenigstens eines Betätigungselementes, insbesondere zur Rückstellung wenigstens eines axialverschiebbaren Betätigungselementes.

Hierdurch kann auf einfache Art und Weise sichergestellt werden, dass die Betätigungselemente jeweils wieder in ihre Ausgangsposition, insbesondere eine zugehörige Nullstellung, zurückgestellt werden können.

Um dennoch in einem betätigten Zustand ein jeweiliges Betätigungselement in der Betätigungsposition halten zu können und einen Betätigungszustand über einen längeren Zeitraum aufrechterhalten zu können, ohne dass ein Fahrer das zugehörige Bedienelement beispielsweise gedrückt halten muss, kann der Lenkstockschalter in einer weiteren möglichen Ausgestaltung ferner wenigstens eine Rasteinrichtung zum lösbaren Verrasten und/oder Arretieren wenigstens eines Betätigungselementes in wenigstens einer Betätigungsposition, insbesondere in wenigstens einer Schaltposition, aufweisen, wobei die Rasteinrichtung insbesondere dazu ausgebildet ist, das Betätigungselement entgegen einer Rückstellkraft einer vorhandenen Rückstelleinrichtung im eingerasteten Zustand in der Betätigungsposition zu halten.

Besonders bevorzugt ist die Rasteinrichtung dabei derart ausgebildet, dass durch eine erneute Betätigung des Betätigungselementes, insbesondere durch ein "Überdrücken", die Verrastung und/oder Arretierung gelöst werden kann, sodass das Betätigungselement mithilfe der Rückstelleinrichtung wieder in seine Ausgangsposition zurückbewegt werden kann.

Hierdurch kann eine Betätigungseinrichtung und damit ein entsprechender Lenkstockschalter bereitgestellt werden, mit welchem ein Betätigungszustand und damit ein Schaltzustand über einen längeren Zeitraum aufrechterhalten werden kann, ohne dass das jeweils zugehörige Betätigungselement der Betätigungseinrichtung dabei manuell von einem Fahrer in Position gehalten werden muss.

In einer weiteren bevorzugten Ausgestaltung eines erfindungsgemäßen Lenkstockschalters weist der Lenkstockschalter ferner wenigstens einen mechanisch betätigbaren Druckschalter auf, insbesondere einen Druckschalter mit einem mechanisch betätigbaren, elektrischen Schaltkontakt, wobei durch eine mechanische Betätigungsbewegung des Druckschalters insbesondere eine elektrische Kontaktierung bewirkbar ist.

Hierdurch kann auf einfache Art und Weise eine zusätzliche Bedienfunktion realisiert werden. Alternativ zu einer zusätzlichen Bedienfunktion kann ein auf diese Weise, insbesondere durch die elektrische Kontaktierung, erzeugtes Schaltsignal auch zur Plausibilisierung eines vom Magnetsensor erzeugten Schaltsignals herangezogen werden, wobei dazu der Druckschalter vorzugsweise derart angeordnet und ausgebildet ist, dass eine elektrische Kontaktierung bewirkt wird, wenn das zu plausibilisierende Schaltsignal jeweils den gewünschten, zur Plausibilisierung gewünschten Schaltwert annehmen soll.

Mithilfe eines derartigen Druckschalters kann auf einfache Art und Weise beispielsweise eine dritte Bedienfunktion realisiert werden, wenn der Magnetsensor nur ein 2D-Hall-Sensor ist und die Betätigungseinrichtung nur eine Betätigung in zwei Betätigungsrichtungen ermöglicht, oder eine vierte Bedienfunktion bei einem Lenkstockschalter mit einer Betätigungseinrichtung mit drei Betätigungsrichtungen und einem 3D-Hall-Sensor.

Die Erfindung wird nun anhand eines bevorzugten Ausführungsbeispiels sowie unter Bezugnahme auf die beigefügten Zeichnungen näher erläutert.

Es zeigen, teilweise nur schematisch:
- Fig. 1: einen gattungsgemäßen Lenkstockschalter aus dem Stand der Technik,
- Fig. 2: die wesentlichen Komponenten eines Ausführungsbeispiels erfindungsgemäßen Lenkstockschalters in Prinzipdarstellung von der Seite,
- Fig. 3: einen Schnitt entlang der Schnittebene A-A` durch einen Teil der Komponenten aus Fig. 1 in einer ersten Schnittansicht, und
- Fig. 4: einen Schnitt entlang der Schnittebene A-A` durch einen Teil der Komponenten aus Fig. 1 in einer zweiten Schnittansicht.

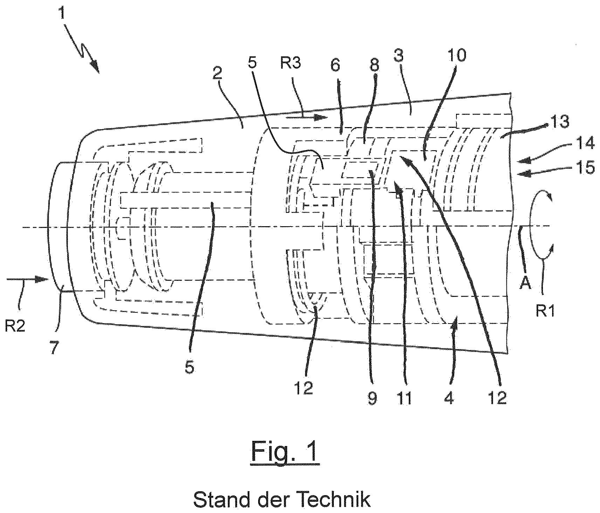

**Fig. 1** zeigt einen Ausschnitt eines aus dem Stand der Technik bekannten Lenkstockhebels 1 für ein Fahrzeug, insbesondere für ein Nutzfahrzeug, mit einer Baugruppe in Form eines gattungsgemäßen Lenkstockschalters mit mehreren Bedienelementen 2, 3 und 7 zur Betätigung des Lenkstockhebels 1, insbesondere zur Betätigung verschiedener Vorrichtungen des Fahrzeugs, wobei das Bedienelement 7 in diesem Fall beispielsweise zur Betätigung eines Horns (einer Hupe) des Fahrzeugs ausgebildet ist, mittels Bedienelement 2 zum Beispiel eine Wischervorrichtung ("Wascher"), mittels welcher Scheibenwaschwasser ausgebracht werden kann, betätigt werden kann und mittels Bedienelement 3 vorzugsweise eine Beleuchtungsvorrichtung oder eine Scheibenwischervorrichtung.

Das Bedienelement 7 ist dabei ein Druckknopf, wobei durch ein Drücken des Druckknopfes 7 entlang einer Achse A, insbesondere durch eine Betätigungsbewegung in einerBetätigungsrichtung R2 entlang der Achse A bezogen auf die Darstellung in Fig. 1 nach rechts, in einem funktionsgemäßen Einbauzustand in einem Fahrzeug, eine Betätigung der zugehörigen Vorrichtung, in diesem Fall des Horns (der Hupe) des Fahrzeugs, bewirkt werden kann. Dazu kann eine auf das Bedienelement 7 in der Betätigungsrichtung R2 aufgebrachte Betätigungsbewegung an ein zugehöriges, mit dem Druckknopf 7 mechanisch gekoppeltes Betätigungselement 5 in Form eines entlang der ersten Achse A axial verschiebbaren Schiebers 5, an dem ein Permanentmagnet 9 befestigt ist, übertragen werden, wobei ein Drücken des Druckknopfes 7 eine Axialverschiebung des Schiebers 5 entlang der Achse A, bezogen auf Fig. 1 nach rechts, bewirkt. Hierdurch wird der an dem Schieber 9 befestigte Permanentmagnet 9 relativ zu einem auf einer Leiterplatte 10 befestigtem Magnetsensor 11, der ortsfest in einem Gehäuse 4 des Lenkstockhebels 1 gelagert ist, axial verschoben, insbesondere mit einer parallel zur Achse A verlaufenden Bewegungsrichtung.

Infolgedessen ändert sich das von dem Magneten 9 erzeugte Magnetfeld am zugehörigen Magnetsensor 11, insbesondere eine von diesem Magnetsensor 11 erfasste Flussdichte und damit ein Schaltsignalwert eines vom Magnetsensor 11 erzeugten Schaltsignals, welches von einer ebenfalls auf der Leiterplatte 10 angeordneten, jedoch nicht näher bezeichneten Auswerteeinrichtung ausgewertet werden kann. Von dem Schaltsignalwert kann auf die Position des Betätigungselements 5 rückgeschlossen werden und somit ermittelt werden, ob der Druckknopf 7 betätigt worden ist oder nicht, insbesondere in welchem Bedien- oder Schaltzustand sich der Druckknopf 7 befindet.

Wurde oder wird erkannt, dass der Druckknopf 7 betätigt worden ist oder wird, kann mittels der Auswerteeinrichtung die zugehörige Vorrichtung, in diesem Fall das Horn, entsprechend angesteuert werden und betätigt werden.

Das Bedienelement 2 ist ebenfalls durch Drücken in axialer Richtung betätigbar, insbesondere durch Drücken in einer Betätigungsrichtung R3, , wobei eine entsprechende, in axialer Richtung aufgebrachte Betätigungsbewegung zur Betätigung dieses Bedienelementes 2 an ein hülsen- oder käfigförmiges Betätigungselement 6, an dem ein zweiter Permanentmagnet 8 befestigt ist, übertragen wird. Dabei bewirkt dasDrücken des Bedienelementes 2 eine Axialverschiebung des käfigartigen Betätigungselementes 6 parallel bzw. entlang der Achse A, bezogen auf Fig. 1 nach rechts.Hierdurch wird der an dem Betätigungselement 6 befestigte Permanentmagnet 8 relativ zu einem zweiten, ebenfalls auf einer Leiterplatte 10 befestigtem Magnetsensor 12 axial verschoben.

Wie zuvor im Zusammenhang mit dem Druckknopf 7 beschrieben worden ist, wird hierdurch ein Schaltsignal erzeugt, insbesondere ein zweites Schaltsignal, das von der Auswerteeinrichtung ebenfalls ausgewertet werden kann. Von diesem zweiten Schaltsignalwert kann auf die Position des Betätigungselementes 6 rückgeschlossen werden und somit ermittelt werden, ob das Bedienelement 2 betätigt worden ist oder nicht, insbesondere in welchem Bedien- oder Schaltzustand sich das Bedienelement 2 befindet.

Wurde oder wird erkannt, dass das Bedienelement 2 betätigt worden ist oder wird, kann mittels der Auswerteeinrichtung die zugehörige Vorrichtung, in diesem Fall die Wischervorrichtung, entsprechend angesteuert werden und betätigt werden.

Das dritte Bedienelement 3 des bekannten, beispielhalber dargestellten Lenkstockhebels 1 ist ein Drehschalter 3, der durch eine Rotationsbewegung um die Achse A des Lenkstockhebels, insbesondere eine Betätigungsbewegung in einer weiteren Betätigungsrichtung R1, betätigt werden kann, wobei der Drehschalter 3 über einen definierten Drehwinkelbereich gegenüber dem Gehäuse 4 verdrehbar ist, wobei der Drehschalter 3 über diesen Drehwinkelbereich mehrere Schaltpositionen einnehmen kann. Dadurch können mit dem einen Drehschalter 3 im Falle einer mit durch den Drehschalter 3 bedienbaren Beleuchtungsvorrichtung verschiedene Beleuchtungszustände geschaltet werden, unter anderem beispielsweise Abblendlicht, Standlicht und Tagfahrlicht. Ist der Drehschalter 3 mit einer Scheibenwischervorrichtung gekoppelt, können beispielsweise verschiedene Scheibenwischer-Betriebsarten geschaltet werden.

Das Bedienelement 3, also der Drehschalter 3, ist dazu mit einem Betätigungselement 13 in Form eines ebenfalls um die Achse A drehbar gegenüber dem Gehäuse 4 gelagerten Drehring 13 gekoppelt, an welchem ein dritter, nicht erkennbar dargestellter Permanentmagnet 14 in Form eines Magnetrings 14 mit mehreren Spuren befestigt ist, wobei der Drehring 13 mit dem Magneten 14 gegenüber einem weiteren, ebenfalls auf der Leiterplatte 10 befestigten und nicht erkennbar dargestellten Magnetsensor 15 bewegbar ist, wobei sich die Leiterplatte 10 bis ins Innere des Drehrings 13 erstreckt. Für jede Schaltposition ist dabei eine Spur vorgesehen, was bedeutet, dass der Magnetsensor 15 für jede Spur einen entsprechenden Hall-Sensor oder ein vergleichbares Sensorelement erfordert. Sind wie in diesem Fall vier Spuren vorgesehen, umfasst der Magnetsensor 15 entsprechend vier Hall-Sensoren.

Wie zuvor im Zusammenhang mit den anderen beiden Bedienelementen 2 und 7 beschrieben worden ist, wird auch hierbei durch die Relativbewegung zwischen Magnet 14 und Magnetsensor 15 eine Schaltsignalinformation erzeugt, insbesondere jeweils ein Schaltsignal pro Magnetspur, welche von der Auswerteeinrichtung ebenfalls ausgewertet werden kann. Von dem Schaltsignalwert der Schaltsignalinformation kann auf die Position des Drehrings 13 rückgeschlossen werden und somit ermittelt werden, ob das Bedienelement 3 betätigt worden ist oder nicht, insbesondere in welchem Bedien- oder Schaltzustand sich das Bedienelement 3 befindet.

Wurde oder wird erkannt, dass das Bedienelement 3 betätigt worden ist oder betätigt ist, und insbesondere in welcher Schaltstellung es sich befindet, kann mittels der Auswerteeinrichtung die zugehörige Vorrichtung, beispielsweise eine Beleuchtungsvorrichtung oder eine Scheibenwischervorrichtung, entsprechend angesteuert werden und betätigt werden.

Die Bedienelemente 7 und 2 sind dabei bevorzugt als"Tast-Bedienelemente" ausgelegt, d.h. als Bedienelemente, welche solange zu einer Betätigung der zugehörigen Vorrichtung führen, wie das jeweilige Bedienelement 7 bzw. 2 betätigt wird, insbesondere gedrückt gehalten wird.

Das Bedienelement 3 hingegen, also der Drehschalter 3, ist bevorzugt als "Rast-Bedienelement" ausgebildet, welches in wenigstens einer, vorzugsweise mehreren, gegebenenfalls auch in sämtlichen Betätigungspositionen verrastet werden kann, so dass auch nach einem Loslassen eine Betätigung aufrechterhalten werden kann, wie es z.B. in Verbindung mit einer Beleuchtungs- oder Scheibenwischervorrichtung vorteilhaft ist, damit der Fahrer nicht die ganze Zeit das Bedienelement betätigen muss. Je nach zugehöriger Vorrichtung oder einzelnen Funktionen der Vorrichtung kann es in einigen Fällen aber auch vorteilhaft sein, wenn das Bedienelement für eine oder mehrere Betätigungspositionen tastend ausgebildet ist.

Ein derartiger Lenkstockhebel, insbesondere ein hierfür erforderlicher Lenkstockschalter, erfordert dabei für jede Betätigungsrichtung R1, R2 und R3, insbesondere für jedes Betätigungselement 5, 6 und 13, jeweils einen eigenen, separaten Magneten 8, 9, 14 sowie jeweils einen eigenen, separaten zugehörigen Magnetsensor 11, 12 ,15 was mit einem nicht unerheblichen Bauraumbedarf sowie mit entsprechenden Kosten verbunden ist, insbesondere, wenn der Magnetsensor mehrere Hall-Sensoren umfasst, wie in diesem Fall der Magnetsensor 15, welcher vier Hall-Sensoren aufweist.

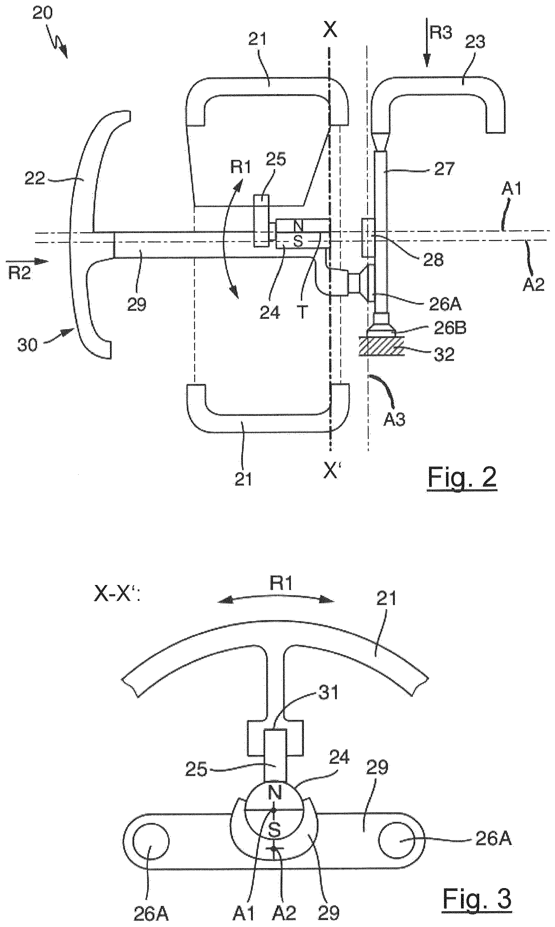

**Fig. 2** zeigt die wesentlichen Komponenten eines Ausführungsbeispiels eines erfindungsgemäßen Lenkstockschalters 20 in Prinzipdarstellung von der Seite, wobei dieses Ausführungsbeispiel eines erfindungsgemäßen Lenkstockschalters 20 insgesamt drei, jeweils mit einem zugehörigen, hier nicht dargestellten Bedienelement eines Lenkstockhebels koppelbare Betätigungselemente 21, 22 und 23 aufweist, welche ebenfalls, insbesondere wie bei dem zuvor beschriebenen, aus dem Stand der Technik bekannten Lenkstockschalter, in drei unterschiedlichen Betätigungsrichtungen R1, R2 und R3 durch eine entsprechende Betätigungsbewegung betätigt werden können.

Die Betätigungselemente 21 und 22 sind dabei derart mit einem gemeinsamen Magneten gekoppelt, insbesondere verbunden, dass durch eine Betätigungsbewegung eines der Betätigungselemente 21 oder 22 in der zugehörigen Betätigungsrichtung R1 bzw. R2 eine Bewegung des Magneten 24 relativ zu einem gemeinsamen Magnetsensor 28 bewirkt wird.

Der Magnetsensor 28 ist dabei dazu ausgebildet, in Abhängigkeit von der erfassten magnetischen Flussdichte des vom Magneten 24 erzeugten Magnetfeldes bzw. in Abhängigkeit von einer Änderung der magnetischen Flussdichte infolge der Relativbewegung zwischen Magnet 24 und Magnetsensor 28 sowohl ein erstes Schaltsignal sowie ein zweites Schaltsignal zu erzeugen.

Der Magnetsensor 28 ist bei diesem Ausführungsbeispiel eines erfindungsgemäßen Lenkstockschalters dabei ein 3D-Hall-Sensor 28, welcher auf einer Leiterplatte 27 mit einem definierten Abstand zum Magneten 24 angeordnet ist, wobei sich die Leiterplatte mit ihrer Leiterplattenebene senkrecht zur ersten Achse A1 und zur zweiten Achse A2 erstreckt.

Das erste Betätigungselement 21 ist ein Drehring 21, ähnlich zu dem Drehring 13 aus Fig. 1, welcher gegenüber einem in Fig. 1 Gehäuse 32 des Lenkstockschalters 20 drehbar um eine erste Achse A1 gelagert ist und durch eine Betätigungsbewegung, insbesondere durch eine Rotationsbewegung, in einer ersten Betätigungsrichtung R1 betätigbar ist.

Das zweite Betätigungselement 22 ist durch eine Betätigungsbewegung in einer zweiten Betätigungsrichtung R2, insbesondere durch ein Drücken bezogen auf die Darstellung in Fig. 1 nach rechts, entlang einer parallel zu ersten Achse A1 verlaufenden zweiten Achse A2 axial verschiebbar gegenüber dem Gehäuse 32 gelagert und weist eine Betätigungsfläche 30 sowie einen Axialschieber 29 auf. Das zweite Betätigungselement 22 ist dabei ähnlich wie das Betätigungselement 5 aus Fig. 1 zur Verbindung mit einem Druckknopf ausgebildet, insbesondere zur Realisierung eines Druckschalters.

Das dritte Betätigungselement 23 ist durch eine Betätigungsbewegung in einer dritten Betätigungsrichtung R3, insbesondere durch ein Drücken bezogen auf die Darstellung in Fig. 1 nach unten, entlang einer dritten, senkrecht zur ersten Achse A1 und zur zweiten Achse A2 verlaufenden dritten Achse A3 axial verschiebbar gegenüber dem Gehäuse 32 gelagert.

Das erste Betätigungselement 21 ist dabei über einen Mitnehmer 25 mit einem Permanentmagneten 24 drehfest verbunden, welcher in einer Vertiefung des zweiten Betätigungselementes 22, insbesondere in dem Axialschieber 29 des zweiten Betätigungselements 22, drehbar um die erste Achse A1 gelagert ist, insbesondere um einen Winkelbereich von etwa 90°.

Der Magnet ist dabei wie anhand von Fig. 3 erkennbar ist, hälftig zu seiner Längsachse polarisiert, wobei der Magnet 24 eine über seine gesamte Länge konstante Polung aufweist und die Form eines Prismas mit einer kreisrunden Grundfläche hat, d. h. zylinderförmig ausgebildet ist, wobei die erste Achse A1 in einer Trennebene T, die durch eine Längsmittelebene des Magneten 24 gebildet ist, zwischen den Polen N und S des Magneten 24 verläuft.

Durch ein Drehen des ersten Betätigungselements 21 um die erste Achse A1 in der ersten Betätigungsrichtung R1 kann somit eine Rotationsbewegung des Magneten 24 um die erste Achse A1 bewirkt werden, insbesondere relativ zu dem Magnetsensor 28.

Dadurch ändert sich ein von dem Magneten 24 erzeugtes und von dem Magnetsensor 28 erfasstes Magnetfeld, insbesondere eine von dem Magnetsensor 28 erfasste Flussdichte, und somit ein Schaltwert eines von dem Magnetsensor 28 erzeugten Schaltsignals, insbesondere ein Schaltwert des für eine Relativbewegung zwischen Magnet 24 und Magnetsensor 28 in einer ersten Bewegungsrichtung bzw. für eine erste Betätigungsrichtung R1 des Magneten 24 repräsentativen Schaltsignals, wobei der Magnetsensor 28 dazu ausgebildet ist, ein Schaltsignal in Abhängigkeit von einem Verdrehwinkel des Magneten 24 relativ zum Magnetsensor 28 um die erste Achse A1 zu erzeugen.

Wie bei dem aus dem Stand der Technik bekannten Lenkstockschalter, kann das Schaltsignal an eine ebenfalls auf der Leiterplatte 27 angeordnete Auswerteeinrichtung übermittelt werden und von der Auswerteeinrichtung entsprechend ausgewertet werden. Somit kann die Position des Betätigungselementes 21 ermittelt werden und in einem funktionsgemäßen Einbauzustand in einem Fahrzeug eine entsprechende, mit der Auswerteeinrichtung verbundene Vorrichtung mithilfe eines von der Auswerteinrichtung ausgesandten Steuersignals in Abhängigkeit von der Betätigungsposition des Betätigungselements 21 angesteuert werden.

Der Magnet 24 ist in axialer Richtung ferner fest mit dem zweiten Betätigungselement 22 verbunden, insbesondere mit dem Schieber 29 des zweiten Betätigungselementes 22, so dass durch eine Axialverschiebung des zweiten Betätigungselementes 22 entlang der parallel zu ersten Achse A1 verlaufenden zweiten Achse A2 in der zweiten Betätigungsrichtung R2, insbesondere durch ein Verschieben nach rechts (bezogen auf die Darstellung in Fig. 1), der Magnet 24 außerdem relativ zu dem Magnetsensor 27 verschoben werden kann, insbesondere in Richtung des Magnetsensors 28.

Dadurch ändert sich ebenfalls das von dem Magneten 24 erzeugte und von dem Magnetsensor 28 erfasste Magnetfeld, insbesondere eine von dem Magnetsensor 28 erfasste Flussdichte, und somit insbesondere ein Schaltwert eines von dem Magnetsensor 28 erzeugten zweiten Schaltsignals, nämlich des Schaltsignals für die Axialverschiebung, insbesondere ein Schaltwert des für eine Relativbewegung zwischen Magnet 24 und Magnetsensor 28 in einer zweiten Bewegungsrichtung bzw. für eine zweite Betätigungsrichtung R2 des Magneten 24 repräsentativen Schaltsignals, wobei der Magnetsensor 28 dazu ausgebildet ist, ein Schaltsignal in Abhängigkeit von einer Axialverschiebung des Magneten 24 relativ zum Magnetsensor 28 entlang bzw. parallel zur zweiten Achse A2 zu erzeugen.

Dieses Schaltsignal kann ebenfalls an die Auswerteeinrichtung übermittelt und von dieser ausgewertet werden. Somit kann mit dem Magneten 24 und dem Magnetsensor 28 auch die Position des Betätigungselementes 22 ermittelt werden. D. h. es sind kein zusätzlicher Magnet oder ein zusätzlicher Magnetsensor hierfür erforderlich. Hierdurch lässt sich ein besonders bauraumsparender und kostengünstiger Lenkstockschalter realisieren.

In einem funktionsgemäßen Einbauzustand in einem Fahrzeug kann dann weiter eine entsprechende, mit der Auswerteeinrichtung verbundene Vorrichtung mithilfe eines von der Auswerteinrichtung ausgesandten Steuersignals in Abhängigkeit von der Betätigungsposition des Betätigungselements 22 angesteuert werden.

Um die drehfeste Verbindung zu dem ersten Betätigungselement 21, d. h. dem Drehring 21, welcher insgesamt um einen Verdrehwinkel von etwa 90° um die erste Achse A1 bzw. die zweite Achse A2 drehbar ist, herzustellen, ist der Magnet 24 fest mit einem sich in radialer Richtung, bezogen auf die ersten Achse A1 bzw. die zweite Achse A2, erstreckenden Vorsprung 25 verbunden, welcher als Mitnehmer 25 dient und in eine im Drehring 21 in radialer Richtung U-förmig ausgebildete und sich in axialer Richtung, d. h. parallel zur ersten Achse A1 bzw. zur zweiten Achse A2, erstreckende, schienenförmige Nut 31 (vgl. Fig. 3) eingreift.

In Verbindung mit der drehbaren Lagerung des Magneten 24 um die erste Achse A1 im zweiten Betätigungselement 22, insbesondere in dessen Schieber 29, kann hierdurch erreicht werden, dass eine Drehbewegung des ersten Betätigungselementes 21 in Form des Drehrings 21 um die erste Achse A1 zu einer Rotation des Magneten 24 führt, ohne dass jedoch das zweite Betätigungselement 22 mit dreht und ohne dass eine Axialverschiebung des zweiten Betätigungselementes 22 mit dem daran axial festgelegten Magneten 24 bewirkt wird.

Außerdem kann durch eine Betätigungsbewegung des zweiten Betätigungselementes 22 in der zweiten Betätigungsrichtung R2, insbesondere durch eine Axialverschiebung des Betätigungselementes 22 nach rechts (bezogen auf die Darstellung in Fig. 1) eine Axialverschiebung des Magneten 24 relativ zum Magnetsensor 28 bewirkt werden, ohne dass das erste Betätigungselement 21 (der Drehring 21) mit verschoben wird und ohne dass eine Rotation des Magneten 24 bewirkt wird.

Des Weiteren ist der Magnetsensor 28 bei diesem Ausführungsbeispiel eines erfindungsgemäßen Lenkstockschalters 20 ferner dazu ausgebildet, ein drittes Schaltsignal in Abhängigkeit von einer Relativbewegung des Magnetsensors 28 entlang einer dritten Achse A3, insbesondere parallel zu einer dritten Betätigungsrichtung R3 relativ gegenüber dem Magneten 24 zu erzeugen.

Bei diesem Lenkstockschalter 20 kann die Axialverschiebung des Magnetsensor 28 entlang der dritten Achse A3, welche sich in diesem Fall senkrecht zur ersten Achse A1 sowie zur zweiten Achse A2 erstreckt, relativ zum Magneten 24 durch eine Drücken des dritten Betätigungselements 23 in der dritten Betätigungsrichtung R3, insbesondere in radialer Richtung, bewirkt werden kann, wobei das Betätigungselement 23 dabei unmittelbar auf die Leiterplatte 27 wirkt und diese axial parallel zur dritten Betätigungsrichtung R3 verschiebt und damit den an der Leiterplatte 27 befestigten Magnetsensor 28.

Um auf einfache Art und Weise eine Rückstellung der Betätigungselemente zu ermöglichen, insbesondere der axialverschiebbaren Betätigungselementes 22 und 23 sind jeweils Gummipads, insbesondere Gummimatten 26A und 26B, vorgesehen, welche wie eine Rückstellfeder wirken und bei einer Betätigung des zugehörigen Betätigungselementes 22 bzw. 23 jeweils elastisch deformiert werden und somit eine entsprechende Rückstellenergie speichern, welche nach einer Freigabe, insbesondere eines Loslassens oder Lösens, des Betätigungselementes 22 bzw. 23 eine entsprechende Rückstellung bewirken. Vorzugsweise sind die Rückstellelemente 26A und 26B, insbesondere die Gummipads 26A und 26B, des zweiten und dritten Betätigungselementes 22 und 23 dabei identisch ausgebildet. Dadurch kann eine Variantenanzahl an vorzuhaltenden Bauteilen reduziert werden, was sich in der Regel vorteilhaft auf die Kosten auswirkt.

Zur Rückstellung des durch eine Rotationsbewegung betätigbaren Betätigungselementes 21, insbesondere des Drehrings 21, kann insbesondere eine hier nicht dargestellte Drehfeder realisiert werden.

Für eine vorteilhafte Kraftverteilung sind vorzugsweise jeweils zwei symmetrisch angeordnete von diesen Gummipads 26A und 26B zur Rückstellung des Betätigungselementes 22 sowie zur Rückstellung des Betätigungselements 23 vorgesehen.

Anhand von **Fig. 3**, welche einen Schnitt entlang der Schnittebene A-A` durch einen Teil der Komponenten aus Fig. 1 in einer ersten Schnittansicht zeigt, ist insbesondere gut erkennbar, wie der Mitnehmer 25, welcher drehfest mit dem Magneten 24 verbunden ist, in die schienenförmige Nut 31 des Betätigungselementes 21 eingreift und wie der Magnet 24 in dem Schieber 29 des Betätigungselementes 22 drehbar um die erste Achse A1 gelagert ist, insbesondere in einer Vertiefung von diesem aufgenommen ist, wobei Fig. 3 das Betätigungselement 21 etwa bei einem mittleren Verdrehwinkel zeigt, d.h. bei einer relativen Verdrehung ausgehend von einer Nullstellung von etwa 45° bei einem gesamten Verdrehwinkel von etwa 90°.

Durch die spezifische Ausgestaltung des Magneten 24 als Zylinder mit einer hälftigen Polung N, S mit der Trennebene T in Längsrichtung und mit der Stirnseite in Richtung des Magnetsensors 28 ändert sich die vom Magnetsensor 28 erfasste Flussdichte verdrehwinkelabhängig. Dies ermöglicht die Erkennung mehrerer Schaltpositionen über den gesamten Verdrehwinkel von insgesamt 90°, wobei dieser erfindungsgemäße Lenkstockschalter 20, insbesondere die Auswerteeinrichtung, dazu eingerichtet ist, acht Schaltpositionen des Bedienelementes 21 zu erfassen und somit acht Schaltzustände des Lenkstockschalters für die erste Betätigungsrichtung R1.

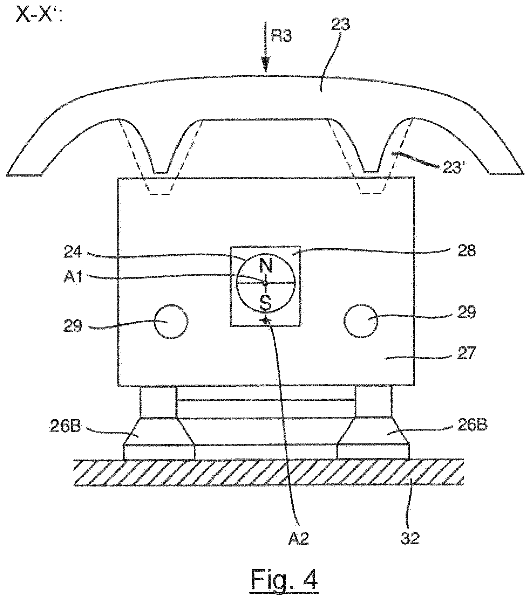

**Fig. 4** zeigt die Schnittansicht auf die andere Schnittfläche des Schnitts entlang der Schnittebene A-A' gemäß Fig. 2, wobei in dieser Darstellung insbesondere gut zu erkennen ist, wie das dritte Betätigungselement 23 auf die Leiterplatte 27 mit dem darauf befestigt Magnetsensor 28 wirkt, insbesondere mit diesem gekoppelt ist, wobei die gestrichelten Linien das Betätigungselement 23 in einem heruntergedrückten, d.h. betätigten Zustand, (23') andeuten sollen.

Ferner sind anhand von Fig. 4 die Gummimatten 26B zur Rückstellung der Leiterplatte 27 und damit des Betätigungselements 23 ebenfalls gut erkennbar, wobei die Gummipads 26B zur Rückstellung der Leiterplatte 27 und des Betätigungselements 23 am Gehäuse 32 des Lenkstockschalters 20 abgestützt sind.

Der Lenkstockschalter 20 weist ferner jeweils hier nicht dargestellte Rasteinrichtungen zum lösbaren Verrasten und Arretieren der Betätigungselemente 21, 22 und 23 in wenigstens einer Betätigungsposition, insbesondere in wenigstens einer Schaltposition, auf. Hierdurch kann der Bedienkomfort des Lenkstockschalters 20 verbessert werden.

Zusätzlich kann ein erfindungsgemäßer Lenkstockschalter 20 ferner wenigstens einen mechanisch betätigbaren Druckschalter aufweisen, insbesondere einen Druckschalter mit einem mechanisch betätigbaren, elektrischen Schaltkontakt, wobei durch eine mechanische Betätigungsbewegung des Druckschalters eine elektrische Kontaktierung bewirkbar ist. Hierdurch kann beispielsweise auf einfache Art und Weise eine weitere Bedienfunktion in den Lenkstockschalter integriert werden oder eine Signalplausibilisierung ermöglicht werden.

### Bezugszeichenliste:

- 1: aus dem Stand der Technik bekannter Lenkstockhebel mit einem aus dem Stand der Technik bekannten Lenkstockschalter
- 2: axial betätigbares Bedienelement
- 3: durch Drehen betätigbares Bedienelement
- 4: Gehäuse
- 5: mit dem axial betätigbaren Bedienelement 7 gekoppeltes Betätigungselement
- 6: mit dem axial betätigbaren Bedienelement 2 gekoppeltes Betätigungselement
- 7: axial betätigbares Bedienelement
- 8: mit dem Betätigungselement 6 verbundener Magnet
- 9: mit dem Betätigungselement 5 verbundener Magnet
- 10: Leiterplatte
- 11: Magnetsensor zur Detektion des vom Magneten 9 erzeugten Magnetfeldes
- 12: Magnetsensor zur Detektion des vom Magneten 8 erzeugten Magnetfeldes
- 13: mit dem durch Drehen betätigbaren Bedienelement 3 gekoppeltes Betätigungselement (Drehring)
- 14: mit dem Betätigungselement 13 verbundener Manger
- 15: Magnetsensor zur Detektion des vom Magneten 14 erzeugten Magnetfeldes

- 20: Ausführungsbeispiel eines erfindungsgemäßen Lenkstockschalters
- 21: erstes, durch Drehen betätigbares Betätigungselement (Drehring)
- 22: zweites, axial verschiebbares Betätigungselement
- 23: drittes, axial verschiebbares Betätigungselement
- 24: Magnet
- 25: Mitnehmer
- 26A, 26B: Gummimatte (Rückstellfeder)
- 27: Leiterplatte
- 28: Magnetsensor (3D-Hall-Sensor)
- 29: Schieber
- 30: Betätigungsfläche
- 31: Nut
- 32: Gehäuse

- A: Achse
- A-A': Schnittebene
- A1: erste Achse
- A2: zweite Achse
- A3: dritte Achse
- N: Nordpol
- R1: erste Betätigungsrichtung
- R2: zweite Betätigungsrichtung
- R3: dritte Betätigungsrichtung
- S: Südpol
- T: Trennebene

## Patentansprüche

1. Lenkstockschalter (20) für ein Fahrzeug, insbesondere für ein Nutzfahrzeug, wobei der Lenkstockschalter (20)
- ein Gehäuse (32),
- eine mit einem Bedienelement koppelbare Betätigungseinrichtung mit einem ersten Betätigungselement (21), einem zweiten Betätigungselement (22) und einem dritten Betätigungselement (23)
- einen Magneten (24) zur Erzeugung eines Magnetfeldes und
- einen Magnetsensor (28) zur Erfassung des von dem Magneten (24) erzeugten Magnetfeldes aufweist,
wobei das erste, das zweite und das dritte Betätigungselement (21,22,23) zumindest teilweise bewegbar gegenüber dem Gehäuse (32) gelagert ist und durch eine Betätigungsbewegung der Betätigungselemente (21,22,23) eine Relativbewegung zwischen dem Magneten (24) und dem Magnetsensor (28) bewirkbar ist,
wobei der Magnetsensor (28) dazu eingerichtet ist, die Relativbewegung zwischen dem Magneten (24) und dem Magnetsensor (28) und/oder eine relative Position von Magnet (24) und Magnetsensor (28) zueinander zu erfassen und in Abhängigkeit von der erfassten Relativbewegung und/oder der erfassten Relativposition ein Schaltsignal zur Bestimmung einer Betätigungsposition der Betätigungselemente (21,22,23) und damit eines Schaltzustandes des Lenkstockschalters (20) zu erzeugen,
wobei eine Betätigungsbewegung des ersten Betätigungselements (21) der Betätigungseinrichtung in einer ersten Betätigungsrichtung (R1) eine Relativbewegung zwischen dem Magneten (24) und dem Magnetsensor (28) in einer ersten Bewegungsrichtung (R1) bewirkbar ist und durch eine Betätigungsbewegung des zweiten Betätigungselements (22) der Betätigungseinrichtung in einer zweiten Betätigungsrichtung (R2) eine Relativbewegung zwischen dem Magneten (24) und dem Magnetsensor (28) in einer von der ersten Bewegungsrichtung (R1) verschiedenen, zweiten Bewegungsrichtung (R2) bewirkbar ist, wobei der Magnetsensor (28) dazu eingerichtet ist, die Relativbewegung zwischen dem Magneten (24) und dem Magnetsensor (28) und/oder eine relative Position von Magnet (24) und Magnetsensor (28) zueinander jeweils in der ersten Bewegungsrichtung (R1) und in der zweiten Bewegungsrichtung (R2) zu erfassen und in Abhängigkeit von der erfassten Relativbewegung und/oder der erfassten Relativposition in der ersten Bewegungsrichtung ein erstes Schaltsignal zu erzeugen und in Abhängigkeit von der erfassten Relativbewegung und/oder der erfassten Relativposition in der zweiten Bewegungsrichtung, ein zweites Schaltsignal,
wobei die erste Bewegungsrichtung (R1), in welcher der Magnet (24) und der Magnetsensor (28) relativ zueinander bewegbar sind, eine Rotationsrichtung ist, wobei mittels wenigstens des ersten Betätigungselementes (21) eine Relativdrehung zwischen dem Magneten (24) und dem Magnetsensor (28) um eine erste Achse (A1) bewirkbar ist, insbesondere eine Verdrehung des Magneten (24) relativ zum Magnetsensor (28),
wobei die zweite Bewegungsrichtung (R2), in welcher der Magnet (24) und der Magnetsensor (28) relativ zueinander bewegbar sind, eine Axialrichtung ist, wobei mittels des zweiten Betätigungselementes (22) eine Axialverschiebung zwischen dem Magneten (24) und dem Magnetsensor (28) entlang einer zweiten Achse (A2) bewirkbar ist, insbesondere eine Axialverschiebung des Magneten (24) relativ zum Magnetsensor (28),
wobei das dritte Betätigungselement (23) axial verschiebbar ist, wobei durch eine Axialverschiebung des dritten Betätigungselementes (23) entlang oder parallel zu einer dritten Achse (A3) eine Axialverschiebung des Magneten (24) oder des Magnetsensors (28) entlang oder parallel zur dritten Achse (A3) bewirkbar ist.

2. Lenkstockschalter (20) nach einem der vorgenannten Ansprüche, **dadurch gekennzeichnet, dass** der Magnet (24) oder der Magnetsensor (28), insbesondere der Magnet (24), drehfest mit dem ersten der Betätigungselemente (21) gekoppelt ist und drehbar gegenüber den anderen Betätigungselementen (22, 23) gelagert ist, wobei der Magnet (24) oder der Magnetsensor (28), insbesondere der Magnet (24), vorzugsweise axial verschiebbar gegenüber dem ersten Betätigungselement (21) gelagert ist, aber fest mit dem zweiten Betätigungselement (22) in axialer Bewegungsrichtung gekoppelt ist.

3. Lenkstockschalter (20) nach einem der vorgenannten Ansprüche, **dadurch gekennzeichnet, dass** der Magnetsensor (28) einen 2D- oder 3D-Hall-Sensor aufweist oder ein 2D- oder 3D-Hall-Sensor ist.

4. Lenkstockschalter (20) nach Anspruch 1 oder 3, **dadurch gekennzeichnet, dass** der Magnetsensor (28) auf einer Trägerplatte (27) angeordnet ist und die Relativbewegung zwischen dem Magneten (24) und dem Magnetsensor (28) in der dritten Bewegungsrichtung (R3) durch eine Axialverschiebung der Trägerplatte (27) bewirkbar ist, insbesondere durch eine Axialverschiebung in der Trägerplattenebene.

5. Lenkstockschalter (20) nach einem der vorgenannten Ansprüche, **dadurch gekennzeichnet, dass** der Magnet (24) ein Permanentmagnet ist, der die Form eines geraden Prismas aufweist mit einer sich senkrecht zu einer Grundfläche erstreckenden Längsachse, insbesondere eines geraden Prismas mit kreisrunder Grundfläche.

6. Lenkstockschalter (20) nach Anspruch 5, wobei der Magnetsensor (28) auf einer bzw. der Trägerplatte (27) angeordnet ist und sich die Trägerplatte (27) zumindest teilweise in einer Trägerplattenebene erstreckt, **dadurch gekennzeichnet, dass** der Magnet (24) derart relativ zum Magnetsensor (28) angeordnet ist, dass sich seine Längsachse senkrecht zur Trägerplattenebene erstreckt.

7. Lenkstockschalter (20) nach Anspruch 5 oder 6, **dadurch gekennzeichnet, dass** der Magnet (24) eine konstante Polung (N, S) aufweist, insbesondere entlang seiner Längsachse, wobei vorzugsweise eine Trennebene (T) zwischen den beiden Magnetpolen (N, S) durch eine Längsmittelebene gebildet ist.

8. Lenkstockschalter (20) nach einem der vorgenannten Ansprüche, **dadurch gekennzeichnet, dass** der Lenkstockschalter (20) wenigstens eine Rückstelleinrichtung (26A, 26B) aufweist, insbesondere wenigstens ein elastisch deformierbares Rückstellelement (26A, 26B), vorzugsweise eine elastische Gummimatte (26A, 26B) oder eine Rückstellfeder, zur Rückstellung wenigstens eines der Betätigungselemente (21, 22, 23).

9. Lenkstockschalter (20) nach einem der vorgenannten Ansprüche, **dadurch gekennzeichnet, dass** der Lenkstockschalter (20) wenigstens eine Rasteinrichtung zum lösbaren Verrasten und/oder Arretieren wenigstens eines der Betätigungselemente (21, 22, 23) in wenigstens einer Betätigungsposition, insbesondere in wenigstens einer Schaltposition, aufweist.

10. Lenkstockschalter (20) nach einem der vorgenannten Ansprüche, **dadurch gekennzeichnet, dass** der Lenkstockschalter (20) ferner wenigstens einen mechanisch betätigbaren Druckschalter aufweist, insbesondere einen Druckschalter mit einem mechanisch betätigbaren, elektrischen Schaltkontakt, wobei durch eine mechanische Betätigungsbewegung des Druckschalters eine elektrische Kontaktierung bewirkbar ist.

11. Lenkstockhebel mit einem Lenkstockschalter (20), **dadurch gekennzeichnet, dass** der Lenkstockschalter (20) nach einem der Ansprüche 1 bis 10 ausgebildet ist.

12. Fahrzeug mit einem Lenkstockhebel, **dadurch gekennzeichnet, dass** der Lenkstockhebel nach Anspruch 11 ausgebildet ist.

## Claims

1. Steering column switch (20) for a vehicle, in particular for a utility vehicle, wherein the steering column switch (20) has
- a housing (32),
- an actuating device which can be coupled to an operating element and has a first actuating element (21), a second actuating element (22) and a third actuating element (23),
- a magnet (24) for generating a magnetic field, and
- a magnetic sensor (28) for detecting the magnetic field generated by the magnet (24),
wherein the first, the second and the third actuating element (21, 22, 23) are at least partially movably mounted with respect to the housing (32) and an actuating movement of the actuating elements (21, 22, 23) can bring about a relative movement between the magnet (24) and the magnetic sensor (28),
wherein the magnetic sensor (28) is set up to detect the relative movement between the magnet (24) and the magnetic sensor (28) and/or a relative position of the magnet (24) and magnetic sensor (28) to one another and, depending on the detected relative movement and/or the detected relative position, to generate a switching signal for determining an actuating position of the actuating elements (21, 22, 23) and thus a switching state of the steering column switch (20),
wherein an actuating movement of the first actuating element (21) of the actuating device in a first actuating direction (R1) can bring about a relative movement between the magnet (24) and the magnetic sensor (28) in a first direction of movement (R1) and an actuating movement of the second actuating element (22) of the actuating device in a second actuating direction (R2) can bring about a relative movement between the magnet (24) and the magnetic sensor (28) in a second direction of movement (R2) different from the first direction of movement (R1), wherein the magnetic sensor (28) is set up to detect the relative movement between the magnet (24) and the magnetic sensor (28) and/or a relative position of the magnet (24) and magnetic sensor (28) to one another in each case in the first direction of movement (R1) and in the second direction of movement (R2) and, depending on the detected relative movement and/or the detected relative position in the first direction of movement, to generate a first switching signal and, depending on the detected relative movement and/or the detected relative position in the second direction of movement, a second switching signal,
wherein the first direction of movement (R1) in which the magnet (24) and the magnetic sensor (28) can be moved relative to one another is a direction of rotation, wherein, by means of at least the first actuating element (21), a relative rotation between the magnet (24) and the magnetic sensor (28) about a first axis (A1) can be brought about, in particular a rotation of the magnet (24) relative to the magnetic sensor (28),
wherein the second direction of movement (R2) in which the magnet (24) and the magnetic sensor (28) can be moved relative to one another is an axial direction, wherein, by means of the second actuating element (22), an axial displacement between the magnet (24) and the magnetic sensor (28) along a second axis (A2) can be brought about, in particular an axial displacement of the magnet (24) relative to the magnetic sensor (28),
wherein the third actuating element (23) is axially displaceable, wherein an axial displacement of the third actuating element (23) along or parallel to a third axis (A3) can bring about an axial displacement of the magnet (24) or of the magnetic sensor (28) along or parallel to the third axis (A3).

2. Steering column switch (20) according to one of the preceding claims, **characterized in that** the magnet (24) or the magnetic sensor (28), in particular the magnet (24), is coupled to the first of the actuating elements (21) in a rotationally fixed manner and is rotatably mounted with respect to the other actuating elements (22, 23), wherein the magnet (24) or the magnetic sensor (28), in particular the magnet (24), is preferably axially displaceably mounted relative to the first actuating element (21), but is fixedly coupled to the second actuating element (22) in the axial direction of movement.

3. Steering column switch (20) according to one of the preceding claims, **characterized in that** the magnetic sensor (28) has a 2D or 3D Hall sensor or is a 2D or 3D Hall sensor.

4. Steering column switch (20) according to Claim 1 or 3, **characterized in that** the magnetic sensor (28) is arranged on a carrier plate (27) and the relative movement between the magnet (24) and the magnetic sensor (28) in the third direction of movement (R3) can be brought about by an axial displacement of the carrier plate (27), in particular by an axial displacement in the carrier plate plane.

5. Steering column switch (20) according to one of the preceding claims, **characterized in that** the magnet (24) is a permanent magnet which has the shape of a straight prism with a longitudinal axis extending perpendicular to a base, in particular a straight prism with a circular base.

6. Steering column switch (20) according to Claim 5, wherein the magnetic sensor (28) is arranged on a or the carrier plate (27) and the carrier plate (27) extends at least partially in a carrier plate plane, **characterized in that** the magnet (24) is arranged relative to the magnetic sensor (28) in such a way that its longitudinal axis extends perpendicular to the carrier plate plane.

7. Steering column switch (20) according to Claim 5 or 6, **characterized in that** the magnet (24) has a constant polarity (N, S), in particular along its longitudinal axis, wherein preferably a separating plane (T) between the two magnetic poles (N, S) is formed by a longitudinal centre plane.

8. Steering column switch (20) according to one of the preceding claims, **characterized in that** the steering column switch (20) has at least one resetting device (26A, 26B), in particular at least one elastically deformable resetting element (26A, 26B), preferably an elastic rubber mat (26A, 26B) or a resetting spring, for resetting at least one of the actuating elements (21, 22, 23) .

9. Steering column switch (20) according to one of the preceding claims, **characterized in that** the steering column switch (20) has at least one latching device for releasably latching and/or locking at least one of the actuating elements (21, 22, 23) in at least one actuating position, in particular in at least one switching position.

10. Steering column switch (20) according to one of the preceding claims, **characterized in that** the steering column switch (20) furthermore has at least one mechanically actuatable press switch, in particular a press switch with a mechanically actuatable electrical switching contact, wherein an electrical contact can be brought about by a mechanical actuating movement of the press switch.

11. Steering column lever with a steering column switch (20), **characterized in that** the steering column switch (20) is designed according to one of Claims 1 to 10.

12. Vehicle with a steering column lever, **characterized in that** the steering column lever is designed according to Claim 11.

## Revendications

1. Commutateur de colonne de direction (20) pour un véhicule, notamment pour un véhicule utilitaire, le commutateur de colonne de direction (20) présentant
- un boîtier (32),
- un dispositif d'actionnement pouvant être couplé à un élément de commande, avec un premier élément d'actionnement (21), un deuxième élément d'actionnement (22) et un troisième élément d'actionnement (23),
- un aimant (24) pour générer un champ magnétique, et
- un capteur magnétique (28) pour détecter le champ magnétique généré par l'aimant (24),
le premier, le deuxième et le troisième élément d'actionnement (21, 22, 23) étant montés au moins partiellement mobiles par rapport au boîtier (32) et un mouvement relatif entre l'aimant (24) et le capteur magnétique (28) pouvant être provoqué par un mouvement d'actionnement des éléments d'actionnement (21, 22, 23), le capteur magnétique (28) étant adapté pour détecter le mouvement relatif entre l'aimant (24) et le capteur magnétique (28) et/ou une position relative de l'aimant (24) et du capteur magnétique (28) l'un par rapport à l'autre et pour générer, en fonction du mouvement relatif détecté et/ou de la position relative détectée, un signal de commutation pour déterminer une position d'actionnement des éléments d'actionnement (21, 22, 23) et donc un état de commutation du commutateur de colonne de direction (20),
un mouvement relatif entre l'aimant (24) et le capteur magnétique (28) dans une première direction de mouvement (R1) pouvant être provoqué par un mouvement d'actionnement du premier élément d'actionnement (21) du dispositif d'actionnement dans une première direction d'actionnement (R1) et un mouvement relatif entre l'aimant (24) et le capteur magnétique (28) dans une deuxième direction de mouvement (R2) différente de la première direction de mouvement (R1) pouvant être provoqué par un mouvement d'actionnement du deuxième élément d'actionnement (22) du dispositif d'actionnement dans une deuxième direction d'actionnement (R2), le capteur magnétique (28) étant adapté pour détecter le mouvement relatif entre l'aimant (24) et le capteur magnétique (28) et/ou une position relative de l'aimant (24) et du capteur magnétique (28) l'un par rapport à l'autre respectivement dans la première direction de mouvement (R1) et dans la deuxième direction de mouvement (R2) et pour générer un premier signal de commutation en fonction du mouvement relatif détecté et/ou de la position relative détectée dans la première direction de mouvement et un deuxième signal de commutation en fonction du mouvement relatif détecté et/ou de la position relative détectée dans la deuxième direction de mouvement,
la première direction de mouvement (R1), dans laquelle l'aimant (24) et le capteur magnétique (28) sont mobiles l'un par rapport à l'autre, étant une direction de rotation, une rotation relative entre l'aimant (24) et le capteur magnétique (28) autour d'un premier axe (A1) pouvant être provoquée au moyen d'au moins le premier élément d'actionnement (21), notamment une rotation de l'aimant (24) par rapport au capteur magnétique (28),
la deuxième direction de mouvement (R2), dans laquelle l'aimant (24) et le capteur magnétique (28) sont mobiles l'un par rapport à l'autre, étant une direction axiale, un déplacement axial entre l'aimant (24) et le capteur magnétique (28) le long d'un deuxième axe (A2) pouvant être provoqué au moyen du deuxième élément d'actionnement (22), notamment un déplacement axial de l'aimant (24) par rapport au capteur magnétique (28),
le troisième élément d'actionnement (23) pouvant être déplacé axialement, un déplacement axial de l'aimant (24) ou du capteur magnétique (28) le long d'un troisième axe (A3) ou parallèlement à celui-ci pouvant être provoqué par un déplacement axial du troisième élément d'actionnement (23) le long du troisième axe (A3) ou parallèlement à celui-ci.

2. Commutateur de colonne de direction (20) selon l'une quelconque des revendications précédentes, **caractérisé en ce que** l'aimant (24) ou le capteur magnétique (28), notamment l'aimant (24), est couplé de manière solidaire en rotation au premier des éléments d'actionnement (21) et est monté rotatif par rapport aux autres éléments d'actionnement (22, 23), l'aimant (24) ou le capteur magnétique (28), notamment l'aimant (24), étant de préférence monté de manière à pouvoir se déplacer axialement par rapport au premier élément d'actionnement (21), mais étant couplé de manière fixe au deuxième élément d'actionnement (22) dans la direction de mouvement axiale.

3. Commutateur de colonne de direction (20) selon l'une quelconque des revendications précédentes, **caractérisé en ce que** le capteur magnétique (28) présente un capteur à effet Hall 2D ou 3D ou est un capteur à effet Hall 2D ou 3D.

4. Commutateur de colonne de direction (20) selon la revendication 1 ou 3, **caractérisé en ce que** le capteur magnétique (28) est agencé sur une plaque de support (27) et le mouvement relatif entre l'aimant (24) et le capteur magnétique (28) dans la troisième direction de mouvement (R3) peut être provoqué par un déplacement axial de la plaque de support (27), notamment par un déplacement axial dans le plan de plaque de support.

5. Commutateur de colonne de direction (20) selon l'une quelconque des revendications précédentes, **caractérisé en ce que** l'aimant (24) est un aimant permanent qui présente la forme d'un prisme droit avec un axe longitudinal s'étendant perpendiculairement à une surface de base, notamment d'un prisme droit avec une surface de base circulaire.

6. Commutateur de colonne de direction (20) selon la revendication 5, le capteur magnétique (28) étant agencé sur une ou la plaque de support (27) et la plaque de support (27) s'étendant au moins partiellement dans un plan de plaque de support, **caractérisé en ce que** l'aimant (24) est agencé par rapport au capteur magnétique (28) de telle sorte que son axe longitudinal s'étend perpendiculairement au plan de plaque de support.

7. Commutateur de colonne de direction (20) selon la revendication 5 ou 6, **caractérisé en ce que** l'aimant (24) présente une polarité constante (N, S), notamment le long de son axe longitudinal, un plan de séparation (T) entre les deux pôles magnétiques (N, S) étant de préférence formé par un plan médian longitudinal.

8. Commutateur de colonne de direction (20) selon l'une quelconque des revendications précédentes, **caractérisé en ce que** le commutateur de colonne de direction (20) présente au moins un dispositif de rappel (26A, 26B), notamment au moins un élément de rappel élastiquement déformable (26A, 26B), de préférence un tapis en caoutchouc élastique (26A, 26B) ou un ressort de rappel, pour le rappel d'au moins un des éléments d'actionnement (21, 22, 23).

9. Commutateur de colonne de direction (20) selon l'une quelconque des revendications précédentes, **caractérisé en ce que** le commutateur de colonne de direction (20) présente au moins un dispositif d'encliquetage pour encliqueter et/ou bloquer de manière amovible au moins un des éléments d'actionnement (21, 22, 23) dans au moins une position d'actionnement, notamment dans au moins une position de commutation.

10. Commutateur de colonne de direction (20) selon l'une quelconque des revendications précédentes, **caractérisé en ce que** le commutateur de colonne de direction (20) présente en outre au moins un commutateur à poussoir pouvant être actionné mécaniquement, notamment un commutateur à poussoir avec un contact de commutation électrique pouvant être actionné mécaniquement, une mise en contact électrique pouvant être provoquée par un mouvement d'actionnement mécanique du commutateur à poussoir.

11. Levier de colonne de direction avec un commutateur de colonne de direction (20), **caractérisé en ce que** le commutateur de colonne de direction (20) est réalisé selon l'une quelconque des revendications 1 à 10.

12. Véhicule avec un levier de colonne de direction, **caractérisé en ce que** le levier de colonne de direction est réalisé selon la revendication 11.
